# EUROPEAN PATENT APPLICATION

(11) **EP 4 299 219 A1**
(43) Date of publication of application: **03.01.2024**
(21) Application number: 22759807.5
(22) Date of filing: 25.02.2022
(51) Int. Cl.: B23B 27/16

(54) **CLAMP STRUCTURE OF CUTTING INSERT, AND CUTTING-EDGE REPLACEABLE CUTTING TOOL**

(30) Priority: 25.02.2021 JP 2021028916; 18.02.2022 JP 2022024232
(71) Applicant: Mitsubishi Materials Corporation, Tokyo 100-8117 (JP)
(72) Inventor: KITAJIMA, Jun, Tokyo 100-8117 (JP); WATANABE, Shota, Tokyo 100-8117 (JP); SUGAWARA, Kenji, Tokyo 100-8117 (JP); MIURA, Ryo, Tokyo 100-8117 (JP)
(74) Representative: Hoffmann Eitle
(86) International application number: PCT/JP2022/007935
(87) International publication number: WO 2022/181773

(57) **Abstract**

A cutting insert has a surface to be pressed and a surface to be restrained. A supporter has a supporter main body, an elastically deformable gripping arm, a pocket, and a slit. The supporter main body has a restraining surface that comes into contact with the surface to be restrained. The gripping arm has a pressing surface that comes into contact with the surface to be pressed. The slit has a pocket opening that is open to the pocket. The pocket opening is disposed between the restraining surface and the pressing surface.

## Description

### [Technical Field]

The present invention relates to a clamp structure of a cutting insert and an indexable cutting tool.

Priority is claimed on Japanese Patent Application No. 2021-028916, filed February 25, 2021 and Japanese Patent Application No. 2022-024232, filed February 18, 2022, the contents of which are incorporated herein by reference.

### [Background Art]

In the related art, for example, an indexable cutting tool described in Patent Document 1 is known. The indexable cutting tool includes a tool main body that has an insert mounting seat, a cutting insert that is made of a hard material, a carrier main body that holds the cutting insert, and a clamp member that fixes the cutting insert and the carrier main body to the insert mounting seat. In Patent Document 1, the outer shape of the expensive cutting insert can be kept small using the carrier main body, and an effect of cost reduction is obtained.

In Patent Document 1, the carrier main body has a pair of gripping arms. The pair of gripping arms are elastically deformed by fastening the clamp member to the tool main body. Specifically, the pair of gripping arms elastically deform such that a width dimension of a vertical slot positioned therebetween narrows, moving closer to each other. Accordingly, an outer peripheral surface of the cutting insert is clamped with an inner surface of each gripping arm. Specifically, two side walls (a lateral inner wall and a rear inner wall) arranged front and rear at the inner surface of each gripping arm come into contact with two side surfaces arranged front and rear at the outer peripheral surface of the cutting insert.

### [Citation List]

### [Patent Document]

[Patent Document 1]
PCT International Publication No. WO2009/047166

### [Summary of Invention]

### [Technical Problem]

However, in Patent Document 1, there is room for improvement in that the cutting insert is stably held by the carrier main body.

An objective of the present invention is to provide a clamp structure of a cutting insert and an indexable cutting tool that can stably hold a cutting insert while making the size of the cutting insert small and reducing costs.

### [Solution to Problem]

According to an aspect of the present invention, there is provided a clamp structure of a cutting insert that is detachably mounted on an insert mounting seat of a tool main body with a clamp member, the clamp structure of a cutting insert including the cutting insert having a polygonal columnar shape and at least a front end portion at which a cutting edge is disposed and a supporter in a plate shape configured to hold an outer peripheral surface of the cutting insert from a side and a rear side. The cutting insert has a surface to be pressed that is disposed at a portion of the outer peripheral surface which faces at least the side and a surface to be restrained that is disposed at a portion of the outer peripheral surface which is positioned on the rear side of the surface to be pressed. The supporter has: a supporter main body to which the clamp member is locked, a gripping arm that protrudes from the supporter main body in a direction orthogonal to a plate thickness direction of the supporter and that elastically deforms with respect to the supporter main body, a pocket that has a recessed shape recessed from a front end portion of the supporter to the rear side and in which the cutting insert is disposed, and a slit that is disposed between the supporter main body and the gripping arm and that is open to both sides of the supporter in the plate thickness direction. The supporter main body has a restraining surface that comes into contact with the surface to be restrained. The gripping arm has a pressing surface that comes into contact with the surface to be pressed. The slit has a pocket opening that is open to the pocket. The pocket opening is disposed between the restraining surface and the pressing surface.

In addition, according to another aspect of the present invention, there is provided an indexable cutting tool including the clamp structure of a cutting insert, the tool main body having the insert mounting seat, and the clamp member configured to fix the clamp structure of a cutting insert to the insert mounting seat.

In the clamp structure of a cutting insert and the indexable cutting tool of the present invention, as the supporter holds the cutting insert, the outer shape of the cutting insert made of an expensive hard material such as cemented carbide can be kept small. For this reason, tool costs can be reduced.

In the present invention, when the clamp structure of a cutting insert, that is, the cutting insert and the supporter are clamped to the insert mounting seat for mounting with the clamp member, the gripping arm elastically deforms. Specifically, as the clamp member is locked to the supporter main body and for example, a drawing force to the rear side is applied to the clamp member, the gripping arm is pressed to a side wall of the insert mounting seat and is elastically deformed. By elastically deforming the gripping arm, the pressing surface of the gripping arm presses the surface to be pressed of the cutting insert.

Specifically, while maintaining a state where the restraining surface of the supporter main body is brought into contact with the surface to be restrained of the cutting insert, the gripping arm is elastically deformed, and the surface to be pressed of the cutting insert is pressed with the pressing surface of the gripping arm. In the present invention, the restraining surface and the pressing surface are separated from each other by the slit positioned therebetween and are relatively displaceable. For this reason, the restraining surface of the supporter and the surface to be restrained of the cutting insert can be stably brought into contact with each other, and the pressing surface of the supporter and the surface to be pressed of the cutting insert can be stably brought into contact with each other. That is, the surface to be restrained and the surface to be pressed of the cutting insert can be stably pressed by the restraining surface and the pressing surface of the supporter.

In the present invention, from the above, the cutting insert can be stably held while making the size of the cutting insert small and reducing costs.

In the clamp structure of a cutting insert, it is preferable that the cutting insert has a front-back inverted symmetrical shape in the plate thickness direction and has a front-rear inverted symmetrical shape in a front-rear direction.

In this case, since at least four cutting edges are disposed for one cutting insert, tool life of the cutting insert can be extended.

In the clamp structure of a cutting insert, it is preferable that the cutting insert has a hexagonal prismatic shape. It is preferable that the outer peripheral surface has: a pair of front side walls that face a front side, a pair of rear side walls that face the rear side, and a pair of lateral side walls that are positioned between the front side walls and the rear side walls and that face the side. It is preferable that the surface to be restrained is disposed at each of the rear side walls. It is preferable that the surface to be pressed is disposed at at least each of the lateral side walls.

In this case, the rear side wall and the lateral side wall of the outer peripheral surface of the cutting insert can be held by the supporter. A state where the cutting insert is held by the supporter becomes stable.

In the clamp structure of a cutting insert, it is preferable that the supporter main body has a through hole that is positioned on a center axis of the supporter and that penetrates the supporter main body in the plate thickness direction. It is preferable that a part of the clamp member is inserted and locked into the through hole.

In this case, with a simple structure, the clamp member can be locked to the supporter main body.

In the clamp structure of a cutting insert, it is preferable that the supporter has: a rectangular plate shape, and a center axis of the through hole is coaxially disposed with the center axis of the supporter.

In the clamp structure of a cutting insert, it is preferable that a rear end portion of the cutting insert is positioned on a front side of the center axis of the supporter.

In this case, for example, the clamp structure of a cutting insert of the present invention is applicable to an existing indexable cutting tool in which a rectangular plate-shaped cutting insert is mounted on an insert mounting seat according to general ISO standards. That is, a product of the present invention can be mounted on an insert mounting seat of a tool main body of a product of the related art, thereby improving versatility.

In the clamp structure of a cutting insert, it is preferable that the cutting insert is pulled out from the pocket to an upper side. It is preferable that the part of the clamp member is inserted from a lower side into the through hole. It is preferable that the through hole has: a surface to be contacted that is disposed at an inner peripheral surface of the through hole and that comes into contact with the part of the clamp member and a stopper that is disposed on the lower side of the surface to be contacted at the inner peripheral surface of the through hole and that protrudes more than the surface to be contacted into the through hole.

In the clamp structure of a cutting insert, the part of the clamp member is inserted into the through hole of the supporter from the lower side and comes into contact with the surface to be contacted of the through hole. As the part of the clamp member presses the surface to be contacted, the supporter and the cutting insert are fixed to the insert mounting seat. In addition, when removing the cutting insert from the supporter, a state where the part of the clamp member presses the surface to be contacted is released, and the cutting insert can be pulled out from the pocket to the upper side.

When the cutting insert is removed from the pocket, due to frictional resistance between the cutting insert and the pocket or being caught or the like (hereinafter, abbreviated as being caught or the like in some cases), a force toward the upper side is applied to the supporter in some cases. Even in such a case, with the configuration of the present invention, since the stopper comes into contact with the part of the clamp member from the lower side, a movement of the supporter to the upper side is suppressed. For this reason, it is suppressed that the supporter is unintentionally removed or dropped from the insert mounting seat. Occurrence of problems such as the supporter being fallen or lost from the cutting tool is suppressed.

In the clamp structure of a cutting insert, it is preferable that the surface to be contacted is disposed at at least a posterior end portion of the inner peripheral surface of the through hole, and the stopper is disposed at at least the posterior end portion of the inner peripheral surface of the through hole.

In this case, since the part of the clamp member presses the surface to be contacted of the through hole toward the rear side, the supporter and the cutting insert can be stably fixed to the insert mounting seat by a pressing force toward the rear side.

In addition, when removing the cutting insert from the supporter, a force of pulling the supporter to a front upper side is applied in some cases due to being caught between the cutting insert and the pocket or the like. Even in such a case, with the configuration of the present invention, since the stopper stably comes into contact with the part of the clamp member from a rear lower side, the operational effects described above become more remarkable.

In the clamp structure of a cutting insert, it is preferable that the through hole has: an up-down inverted symmetrical shape.

In this case, also in a case where the insert mounting seat is disposed in a posture in which the supporter is inverted upside down, the same retaining function described above is performed. Therefore, the clamp structure of a cutting insert of the present invention is also applicable to, for example, cutting tools having different directions of handedness. That is, in both of a case where the cutting tool is right-handed and a case where the cutting tool is left-handed, the same supporter can be used as a common product. For this reason, versatility of the supporter is improved, and member management is easy.

In the clamp structure of a cutting insert, it is preferable that the slit extends about the center axis of the supporter when viewed from the plate thickness direction.

In this case, a displacement amount of the pressing surface when the gripping arm has elastically deformed can be greatly ensured, and the cutting insert can be stably held by the gripping arm.

In the clamp structure of a cutting insert, it is preferable that the slit has an arc shape when viewed from the plate thickness direction.

In this case, occurrence of stress concentration in a part of the slit is suppressed, and damage or the like of the supporter starting from the slit is suppressed.

In the clamp structure of a cutting insert, it is preferable that a pair of the gripping arms are provided, and the pocket is disposed between the pair of gripping arms.

In this case, as each of the pair of gripping arms elastically deforms, a relative displacement amount of each of the pressing surfaces of the pair of gripping arms is greatly ensured. For this reason, work of attaching and detaching the cutting insert to the pocket is easy. In particular, when the size of the cutting insert is small as in the present invention, the cutting insert unintentionally falls or is lost at a time of attaching and detaching with respect to the supporter is conceivable, but such falling or loss is suppressed since detachability is improved with the configuration.

### [Advantageous Effects of Invention]

In the clamp structure of a cutting insert and the indexable cutting tool according to the aspects of the present invention, the cutting insert can be stably held while making the size of the cutting insert small and reducing costs.

### [Brief Description of Drawings]

FIG. 1 is a perspective view showing a clamp structure of a cutting insert and a part of an indexable cutting tool of a first embodiment.
FIG. 2 is a perspective view showing the clamp structure of a cutting insert of the first embodiment.
FIG. 3A is a top view showing the clamp structure of a cutting insert.
FIG. 3B is a front view showing the clamp structure of a cutting insert.
FIG. 4 is a side view showing the clamp structure of a cutting insert.
FIG. 5 is a perspective view showing a cutting insert.
FIG. 6A is a top view showing the cutting insert.
FIG. 6B is a front view showing the cutting insert.
FIG. 6C is a side view showing the cutting insert.
FIG. 7 is a perspective view showing a supporter.
FIG. 8 is a perspective view showing a clamp structure of a cutting insert according to a first modification example of the first embodiment.
FIG. 9 is a perspective view showing a clamp structure of a cutting insert according to a second modification example of the first embodiment.
FIG. 10 is a perspective view showing a clamp structure of a cutting insert according to a third modification example of the first embodiment.
FIG. 11 is a top view showing the clamp structure of a cutting insert according to the third modification example of the first embodiment.
FIG. 12 is a perspective view showing a supporter according to the third modification example of the first embodiment.
FIG. 13 is a top view showing a part of an indexable cutting tool of a second embodiment.
FIG. 14 is a side view showing a part of the indexable cutting tool of the second embodiment.
FIG. 15 is a front view showing a part of the indexable cutting tool of the second embodiment.
FIG. 16 is a cross sectional view showing a cross section taken along line XVI-XVI of FIG. 13 and shows a state where a supporter and a cutting insert are clamped with a clamp member.
FIG. 17 is a cross sectional view showing a cross section taken along line XVI-XVI of FIG. 13 and shows a state where clamping with the clamp member with respect to the supporter and the cutting insert is released.
FIG. 18 is a perspective view showing a clamp structure of a cutting insert of the second embodiment.
FIG. 19 is a perspective view showing the cutting insert.
FIG. 20A is a top view showing the cutting insert.
FIG. 20B is a rear view showing the cutting insert.
FIG. 20C is a side view showing the cutting insert.
FIG. 21 is a perspective view showing the supporter.
FIG. 22 is a top view showing the supporter.
FIG. 23 is a cross sectional view showing a cross section taken along line XXIII-XXIII of FIG. 22.
FIG. 24 is a cross sectional view showing a part of a clamp structure of a cutting insert according to a fourth modification example of the second embodiment and omits showing of a sheet member.
FIG. 25 is a cross sectional view showing a part of a clamp structure of a cutting insert according to a fifth modification example of the second embodiment and omits showing of a sheet member.
FIG. 26 is a cross sectional view showing a part of a clamp structure of a cutting insert according to a sixth modification example of the second embodiment and omits showing of a sheet member.

### [Description of Embodiments]

### <First Embodiment>

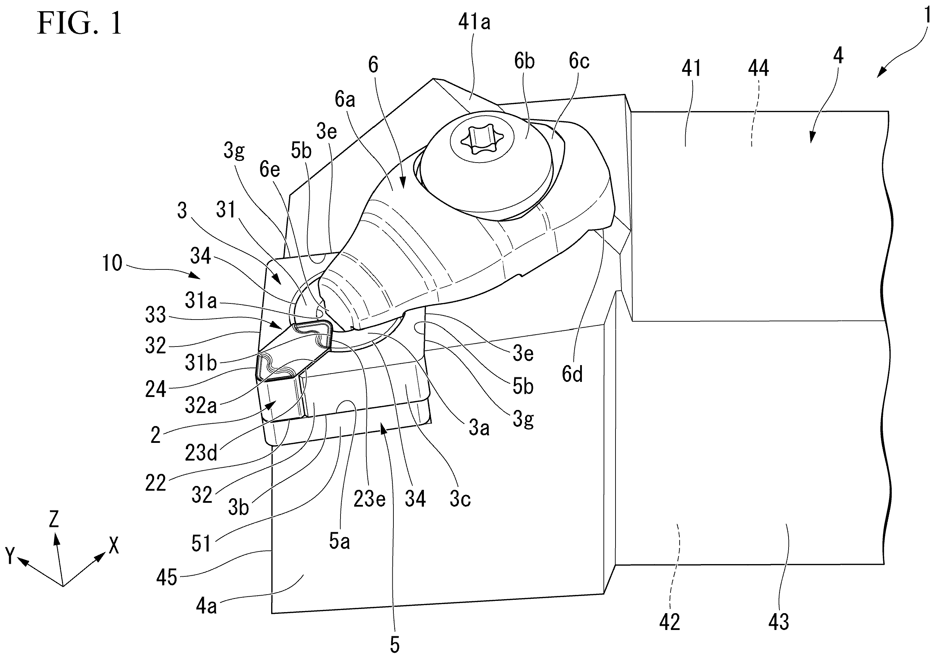

A clamp structure of a cutting insert 10 and an indexable cutting tool 1 including the clamp structure of a cutting insert according to a first embodiment of the present invention will be described with reference to FIGS. 1 to 7. The indexable cutting tool 1 of the present embodiment is an edge tip replacement type byte used in turning and is detachably mounted on a cutter holder or the like of a machine tool such as a lathe (not shown). In the present embodiment, the indexable cutting tool 1 will be simply called a cutting tool, a tool, or the like in some cases.

As shown in FIG. 1, the indexable cutting tool 1 includes the clamp structure of a cutting insert 10, a tool main body 4 that has an insert mounting seat 5, and a clamp member 6 that fixes the clamp structure of a cutting insert 10 to the insert mounting seat 5.

The clamp structure of a cutting insert 10 is detachably mounted on the insert mounting seat 5 of the tool main body 4 with the clamp member 6. The clamp structure of a cutting insert 10 includes a cutting insert 2 that has a polygonal columnar shape and a supporter in a plate shape 3 that holds the cutting insert 2.

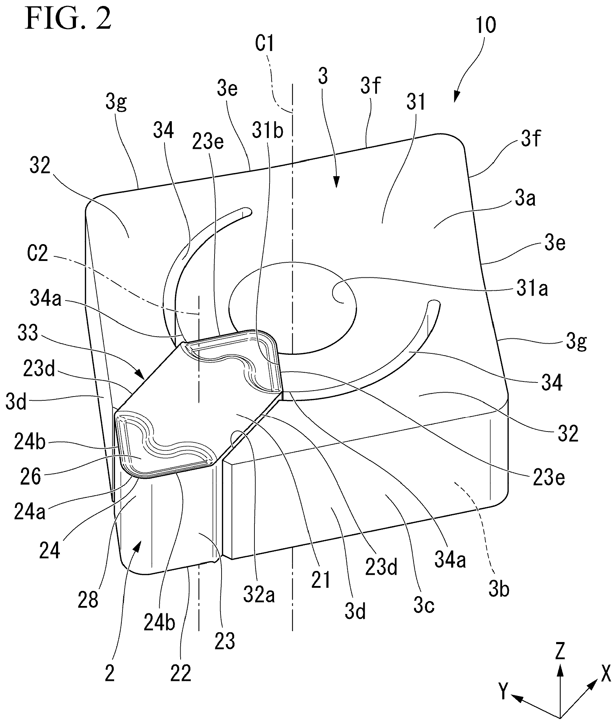

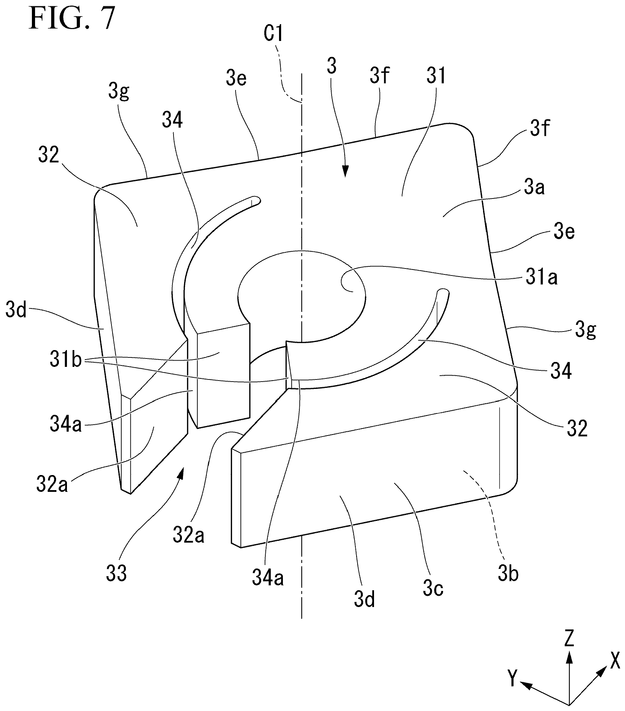

As shown in FIG. 2, in the present embodiment, the supporter 3 has a rectangular plate shape centered on a center axis C1. The supporter 3 has a pair of plate surfaces 3a and 3b facing opposite directions to each other in a direction in which the center axis C1 extends, that is, an axial direction of the center axis C1. One plate surface 3a of the pair of plate surfaces 3a and 3b is a front surface 3a, and the other plate surface 3b is a back surface 3b. In addition, the supporter 3 has a recessed pocket 33 disposed at one corner part of four corner parts of the supporter 3 (see FIG. 7). The cutting insert 2 is disposed in the pocket 33.

### [Definition of Directions]

In the present embodiment, a direction in which the pair of plate surfaces 3a and 3b of the supporter 3 face will be called a plate thickness direction or an up-down direction. In an XYZ orthogonal coordinate system shown in each drawing, the plate thickness direction corresponds to a Z-axis direction. Of the plate thickness direction, a direction from the back surface 3b toward the front surface 3a (+Z side) will be called an upper side, and a direction from the front surface 3a toward the back surface 3b (-Z side) will be called a lower side. The plate thickness direction corresponds to the axial direction of the center axis C1 of the supporter 3. For this reason, the plate thickness direction may be rephrased as the axial direction.

Among directions orthogonal to the plate thickness direction, a predetermined direction passing through one corner part where the pocket 33 of the supporter 3 is disposed and the other corner part positioned diagonally across the one corner part will be called a front-rear direction. The front-rear direction corresponds to an X-axis direction. Of the front-rear direction, a direction from the other corner part toward the one corner part (pocket 33) (-X side) will be called a front side, and a direction from the one corner part toward the other corner part (+X side) will be called a rear side.

A direction orthogonal to the plate thickness direction and the front-rear direction will be called the side or a right-left direction. The side corresponds to a Y-axis direction. Of the side, one side (+Y side) will be called a left side, and the other side (-Y side) will be called a right side. The +Y side corresponds to the left side when the clamp structure of a cutting insert 10 is viewed from the front side, and the -Y side corresponds to the right side when the clamp structure of a cutting insert 10 is viewed from the front side.

In the present embodiment, the upper side, the lower side, the front side, the rear side, the left side, and the right side are names for simply describing a relative positional relationship between the portions, and an actual disposition relationship or the like may be a disposition relationship other than the disposition relationship indicated by the names or the like.

In addition, a direction orthogonal to the center axis C1 of the supporter 3 will be called a radial direction. Of the radial direction, a direction closer to the center axis C1 will be called an inner side in the radial direction, and a direction away from the center axis C1 will be called an outer side in the radial direction.

In addition, a direction turning around the center axis C1 of the supporter 3 will be called a circumferential direction.

The center axis C1 may be rephrased as a supporter center axis C1, and the axial direction may be rephrased as a supporter axial direction. In addition, the radial direction may be rephrased as a supporter radial direction. The circumferential direction may be rephrased as a supporter circumferential direction.

A direction in which an insert center axis C2 of the cutting insert 2 extends will be called an insert axial direction. The insert center axis C2 of the cutting insert 2 is positioned on the front side of the center axis C1 of the supporter 3 and extends parallel to the center axis C1. That is, the insert axial direction corresponds to the supporter axial direction, the plate thickness direction, and the up-down direction.

A direction orthogonal to the insert center axis C2 will be called an insert radial direction. Of the insert radial direction, a direction closer to the insert center axis C2 will be called an inner side in the insert radial direction, and a direction away from the insert center axis C2 will be called an outer side in the insert radial direction.

A direction turning around the insert center axis C2 will be called an insert circumferential direction.

### [Tool Main Body]

The tool main body 4 is made of a metal such as steel. As shown in FIG. 1, the tool main body 4 has a substantially prismatic shape and extends along a tool center axis (not shown). The insert mounting seat 5 is disposed at a first end portion 4a of both end portions (the first end portion 4a and a second end portion (not shown)) of the tool main body 4. In the present embodiment, a direction in which the tool center axis extends will be called a tool axial direction. In addition, of the tool axial direction, a direction from the second end portion toward the first end portion 4a will be called a front end side, and a direction from the first end portion 4a toward the second end portion will be called a posterior end side. The tool main body 4 has a top surface 41 and a bottom surface 42 that face opposite directions to each other, a pair of lateral surfaces 43 and 44 that face opposite directions to each other, and a front end surface 45 that is positioned at an end surface of the first end portion 4a.

Among the outer surfaces of the tool main body 4, the top surface 41 faces the upper side. A portion of the top surface 41 which is positioned at the first end portion 4a, that is, a front end portion of the tool main body 4 protrudes to the upper side of portions other than the first end portion 4a. In addition, the tool main body 4 has an inclined surface 41a. The inclined surface 41a is disposed at a portion of the top surface 41 which is positioned at the first end portion 4a. The inclined surface 41a has an inclined flat surface shape which is positioned on the lower side toward the rear side. Among the outer surfaces of the tool main body 4, the bottom surface 42 faces the lower side.

Among the outer surfaces of the tool main body 4, one lateral surface 43 faces the right side. A portion of the one lateral surface 43 which is positioned at the first end portion 4a of the tool main body 4 protrudes to the right side of portions other than the first end portion 4a. Among the outer surfaces of the tool main body 4, the other lateral surface 44 faces the left side.

The tool main body 4 has the insert mounting seat 5 on which the cutting insert 2 and the supporter 3 are detachably mounted and a screw hole (not shown) into which a clamp screw 6b, which is to be described later, of the clamp member 6 is screwed. The screw hole is open to a portion of the top surface 41 which is positioned between the insert mounting seat 5 and the inclined surface 41a and extends along a substantially up-down direction.

The insert mounting seat 5 has a plate-shaped sheet member 51. The sheet member 51 configures a part (bottom surface) of the insert mounting seat 5. The sheet member 51 has a sheet hole (not shown) that penetrates the sheet member 51 in the plate thickness direction. The sheet member 51 is fixed to the first end portion 4a by a sheet fixing screw (not shown) inserted into the sheet hole. In the present embodiment, the sheet member 51 has a rectangular plate shape. The sheet member 51 is made of, for example, cemented carbide.

The insert mounting seat 5 is open to the top surface 41, the one lateral surface 43, and the front end surface 45, at the first end portion 4a, that is the front end portion of the tool main body 4. The insert mounting seat 5 has a recessed shape recessed from the top surface 41, the one lateral surface 43, and the front end surface 45 of the tool main body 4. The insert mounting seat 5 is a recess portion that can receive the clamp structure of a cutting insert 10, that is, the cutting insert 2 and the supporter 3. In the present embodiment, the insert mounting seat 5 has a substantially rectangular recessed shape.

The insert mounting seat 5 has a bottom wall 5a that comes into contact with a back surface 22 of the cutting insert 2 and the back surface 3b of the supporter 3 and a side wall 5b that comes into contact with an outer peripheral surface 3c of the supporter 3.

The bottom wall 5a is configured by one plate surface (upper surface) facing the upper side of a pair of plate surfaces of the sheet member 51. A plurality of side walls 5b are provided. In the present embodiment, the insert mounting seat 5 has a pair of side walls 5b. In the present embodiment, when viewed from the up-down direction, an angle formed between the pair of side walls 5b is, for example, 80°.

### [Cutting Insert]

The cutting insert 2 is made of, for example, cemented carbide, polycrystalline diamond (PCD), cubic boron nitride (cBN), cermet, ceramic, or the like. The cutting insert 2 is a hard sintered body having higher hardness than that of the tool main body 4. The cutting insert 2 is detachably mounted on the pocket 33 of the supporter 3. The cutting insert 2 is fixed to the pocket 33 by being clamped to the supporter 3.

As shown in FIG. 2, the cutting insert 2 of the present embodiment has a hexagonal prismatic shape centered on the insert center axis C2. The dimension of the cutting insert 2 in the front-rear direction is larger than the dimension of the cutting insert 2 in the right-left direction. That is, the cutting insert 2 extends in the front-rear direction. The dimension, that is, the width dimension of the cutting insert 2 in the right-left direction is, for example, 3 mm or more and 6 mm or less.

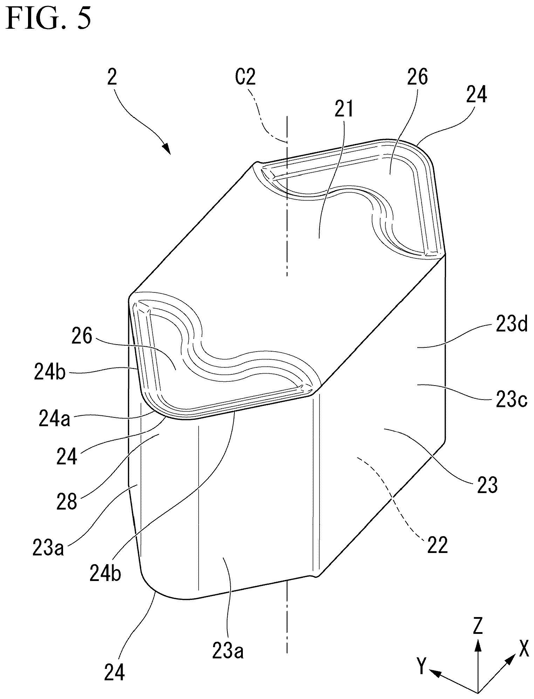

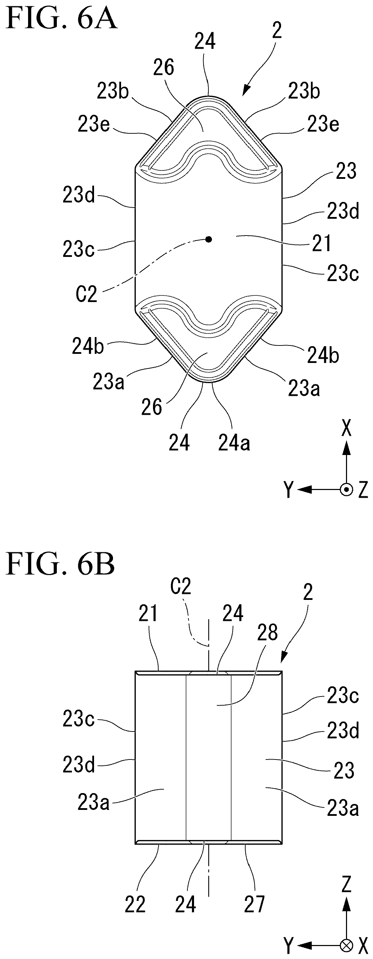

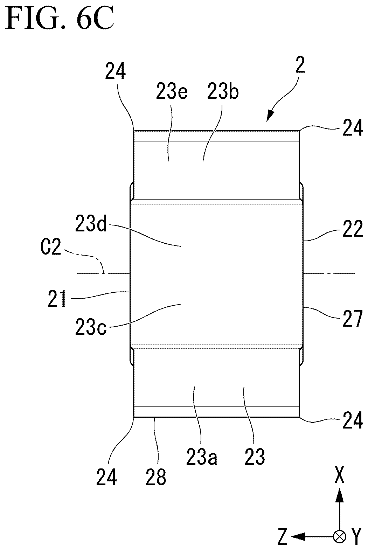

As shown in FIGS. 5 and 6A to 6C, the cutting insert 2 has a front surface 21 and the back surface 22 that face the up-down direction, an outer peripheral surface 23 that is connected to the front surface 21 and the back surface 22, and a cutting edge 24 that is disposed at at least a ridge portion where the front surface 21 and the outer peripheral surface 23 are connected to each other.

The front surface 21 has a polygonal shape and in the present embodiment, has a hexagonal shape that is long in the front-rear direction. The front surface 21 faces the upper side. The front surface 21 has a rake face 26. The rake face 26 is disposed at an end portion of the front surface 21 in the front-rear direction. The rake face 26 is disposed at a portion of the front surface 21 adjacent to the cutting edge 24. The rake face 26 is connected to the cutting edge 24.

The back surface 22 has a polygonal shape and in the present embodiment, has a hexagonal shape that is long in the front-rear direction. The back surface 22 faces the lower side. The back surface 22 has a seating surface 27. The seating surface 27 is disposed at an intermediate portion of the back surface 22 which is positioned between both end portions in the front-rear direction. The seating surface 27 has a flat surface shape expanding in a direction perpendicular to the insert center axis C2. The seating surface 27 protrudes in the insert axial direction more than portions of the back surface 22 other than the seating surface 27. The seating surface 27 comes into contact with the bottom wall 5a of the insert mounting seat 5.

The outer peripheral surface 23 faces the outer side in the insert radial direction and extends in the insert circumferential direction. The outer peripheral surface 23 has a flank face 28. The flank face 28 is disposed at an end portion of the outer peripheral surface 23 in the insert axial direction. The flank face 28 is disposed at a portion of the outer peripheral surface 23 which is adjacent to the cutting edge 24. The flank face 28 is connected to the cutting edge 24.

The outer peripheral surface 23 has six flat surface-shaped side walls 23a, 23b, and 23c arranged in the insert circumferential direction. Specifically, the outer peripheral surface 23 has a pair of front side walls 23a facing the front side, a pair of rear side walls 23b facing the rear side, and a pair of lateral side walls 23c that are positioned between the front side walls 23a and the rear side walls 23b and that face the side.

The front side walls 23a are disposed at a portion of the outer peripheral surface 23 which faces the front side. The pair of front side walls 23a are arranged in the insert circumferential direction. In the present embodiment, a protruded curved face portion that is convex toward the front side is disposed between the pair of front side walls 23a.

The rear side walls 23b are disposed at a portion of the outer peripheral surface 23 which faces the rear side. The pair of rear side walls 23b are arranged in the insert circumferential direction. In the present embodiment, a protruded curved face portion that is convex toward the rear side is disposed between the pair of rear side walls 23b.

The lateral side walls 23c are disposed at a portion of the outer peripheral surface 23 which faces the side. The pair of lateral side walls 23c face opposite directions to each other in the right-left direction (the side). That is, one lateral side wall 23c of the pair of lateral side walls 23c faces the left side, and the other lateral side wall 23c faces the right side.

In addition, the outer peripheral surface 23 has a surface to be pressed 23d and a surface to be restrained 23e. That is, the cutting insert 2 has a surface to be pressed 23d and a surface to be restrained 23e.

The surface to be pressed 23d has a flat surface shape. That is, in the present embodiment, the surface to be pressed 23d is configured by one flat surface portion. The outer peripheral surface 23 is provided with a pair of surface to be pressed 23d. In the present embodiment, the pair of surface to be pressed 23d are disposed at the pair of lateral side walls 23c. That is, the surface to be pressed 23d are disposed at at least the lateral side walls 23c. That is, the surface to be pressed 23d are disposed at a portion of the outer peripheral surface 23 which faces at least the side.

The surface to be restrained 23e has a flat surface shape. The outer peripheral surface 23 is provided with a pair of surface to be restrained 23e. The pair of surface to be restrained 23e are disposed at the pair of rear side walls 23b. That is, the surface to be restrained 23e are disposed at the portion of the outer peripheral surface 23 which faces the rear side. The surface to be restrained 23e are disposed at a portion of the outer peripheral surface 23 which is positioned on the rear side of the surface to be pressed 23d. In the present embodiment, the pair of surface to be restrained 23e are disposed between the pair of surface to be pressed 23d in the insert circumferential direction.

The cutting edge 24 is disposed at at least a front end portion of the cutting insert 2. The cutting edge 24 is disposed at a ridge portion where the rake face 26 and the flank face 28 are connected to each other. The cutting edge 24 has a convex V-shape that protrudes toward the front side. The cutting edge 24 has a corner cutting portion 24a and a linear cutting portion 24b.

The corner cutting portion 24a has a convex curve shape that bulges toward the front side. The linear cutting portion 24b is connected to an end portion of the corner cutting portion 24a and linearly extends. The edge length of the linear cutting portion 24b is larger than the edge length of the corner cutting portion 24a. In the present embodiment, a pair of linear cutting portions 24b are connected to both end portions in an edge length direction in which the corner cutting portion 24a extends. That is, the cutting edge 24 is provided with the pair of linear cutting portions 24b. In the present embodiment, when viewed from the insert axial direction (up-down direction), an angle formed between the pair of linear cutting portions 24b is, for example, 80°.

In the present embodiment, the cutting insert 2 has a front-back inverted symmetrical shape in the insert axial direction, that is, the plate thickness direction. In addition, the cutting insert 2 has a front-rear inverted symmetrical shape in the front-rear direction. For this reason, the cutting insert 2 is provided with a plurality of cutting edges 24. Specifically, in total four cutting edges 24 are provided, two at both end portions of the front surface 21 in the front-rear direction and two at both end portions of the back surface 22 in the front-rear direction.

As shown in FIGS. 2 to 4, in a state where the cutting insert 2 is held by the supporter 3, the cutting edge 24 positioned at the front end portion of the cutting insert 2 is disposed to protrude to the front side of the supporter 3. In addition, a rear end portion of the cutting insert 2 is positioned on the front side of the center axis C1 of the supporter 3.

### [Supporter]

The supporter 3 is made of a metal such as a steel material. The supporter 3 is configured by an affordable material having lower hardness and higher toughness than those of the cutting insert 2. The supporter 3 holds the outer peripheral surface 23 of the cutting insert 2 from the side and the rear side. In the present embodiment, the supporter 3 has a front-back inverted symmetrical shape.

The supporter 3 has the pair of plate surfaces 3a and 3b and the outer peripheral surface 3c. The pair of plate surfaces 3a and 3b face the up-down direction. One plate surface (front surface) 3a of the pair of plate surfaces 3a and 3b faces the upper side. The one plate surface 3a has a flat surface shape that expands in a direction perpendicular to the center axis C1. The other plate surface (back surface) 3b of the pair of plate surfaces 3a and 3b faces the lower side. The other plate surface 3b has a flat surface shape that expands in the direction perpendicular to the center axis C1.

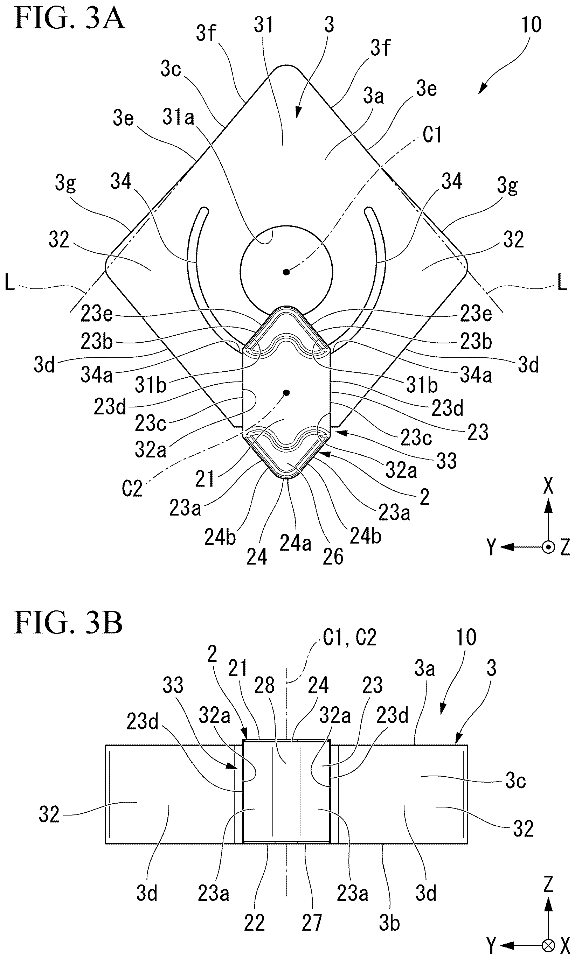

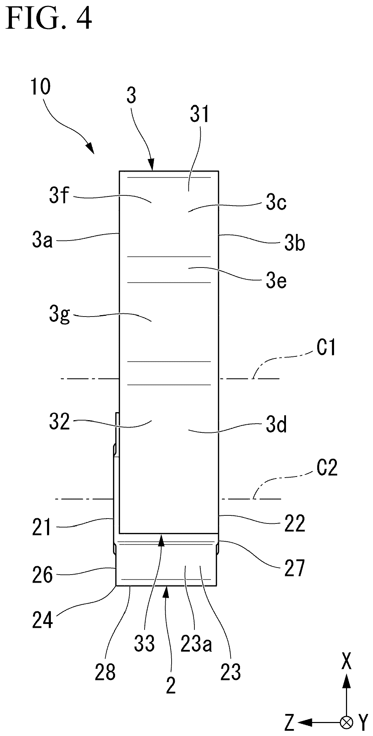

As shown in FIGS. 3B and 4, the front surface 21 of the cutting insert 2 is disposed to protrude to the upper side of the one plate surface 3a. The seating surface 27 of the back surface 22 of the cutting insert 2 is disposed at the same position as the other plate surface 3b in the up-down direction, that is, to be flush with the back surface 3b of the supporter 3. The seating surface 27 and the back surface 3b come into contact with the bottom wall 5a of the insert mounting seat 5, that is, an upper surface of the sheet member 51.

As shown in FIGS. 2 to 4 and 7, both end portions of the outer peripheral surface 3c in the up-down direction are connected to the pair of plate surfaces 3a and 3b. The outer peripheral surface 3c has four side surfaces 3d and 3e arranged in the circumferential direction (supporter circumferential direction). The four side surfaces 3d and 3e are disposed at four side portions of the supporter 3, which form a substantially rectangular shape when viewed from the up-down direction. Specifically, the outer peripheral surface 3c has a pair of front side surfaces 3d that face the front side and a pair of rear side surfaces 3e that face the rear side.

The front side surfaces 3d are disposed at a portion of the outer peripheral surface 3c which faces the front side. The front side surfaces 3d have a flat surface shape. The pair of front side surfaces 3d are arranged in the circumferential direction. The pocket 33 is open between the pair of front side surfaces 3d. In the present embodiment, when viewed from the up-down direction as shown in FIG. 3A, an angle formed between the pair of front side surfaces 3d is, for example, 80°.

The rear side surfaces 3e are disposed at a portion of the outer peripheral surface 3c which faces the rear side. The pair of rear side surfaces 3e are arranged in the circumferential direction. As shown in FIGS. 3A and 4, each of the rear side surfaces 3e has two flat surface portions 3f and 3g arranged in the circumferential direction. One flat surface portion 3f of the two flat surface portions 3f and 3g disposed at a rear portion of the rear side surface 3e is the flat surface portion 3f on a main body side, and the other flat surface portion 3g disposed at a front portion of the rear side surface 3e is the flat surface portion 3g on an arm side. That is, the outer peripheral surface 3c is provided with a pair of flat surface portions 3f on the main body side and is provided with a pair of flat surface portions 3g on the arm side.

In the present embodiment, when viewed from the up-down direction as shown in FIG. 3A, an angle formed between the pair of flat surface portions 3f on the main body side is, for example, 80°. In addition, when viewed from the up-down direction, an angle formed between the pair of flat surface portions 3g on the arm side is, for example, 86°. That is, when viewed from the up-down direction, the angle formed between the pair of flat surface portions 3g on the arm side is larger than the angle formed between the pair of flat surface portions 3f on the main body side. For this reason, in top view seen from the up-down direction, the flat surface portions 3g on the arm side project to the outer side of virtual extension lines L of the flat surface portions 3f on the main body side. In addition, when viewed from the up-down direction, the angle formed between the pair of flat surface portions 3g on the arm side is larger than an angle formed between the pair of side walls 5b of the insert mounting seat 5.

In addition, as shown in FIGS. 2 to 4 and 7, the supporter 3 has a supporter main body 31, a gripping arm 32, the pocket 33, and a slit 34.

The supporter main body 31 is positioned at a central portion and a rear portion of the supporter 3. The supporter main body 31 extends in the front-rear direction. A front portion of the supporter main body 31, that is, a portion corresponding to a central portion of the supporter 3 has a substantially cylindrical shape. A rear portion of the supporter main body 31 has a substantially triangular columnar shape. The pair of flat surface portions 3f on the main body side are disposed at the supporter main body 31. The pair of flat surface portions 3f on the main body side are disposed at a wall portion of the supporter main body 31 which faces the rear side.

The supporter main body 31 has a through hole 31a and a restraining surface 31b. The through hole 31a and the restraining surface 31b are disposed at a front portion of the supporter main body 31.

The through hole 31a is positioned on the center axis C1 of the supporter 3 and penetrates the supporter main body 31 in the plate thickness direction (up-down direction). That is, the through hole 31a penetrates the supporter 3 in the up-down direction. The through hole 31a has a circular hole shape that extends in the plate thickness direction and that is open to the pair of plate surfaces 3a and 3b. A center axis of the through hole 31a is disposed coaxially with the center axis C1 of the supporter 3. The through hole 31a of the supporter 3 has the same inner diameter dimension as that of a through hole of the rectangular plate-shaped cutting insert (diamond-shaped insert) according to general ISO standards. As shown in FIG. 1, a projection 6e of a clamp piece 6a, which is to be described later, of the clamp member 6 is inserted and locked into the through hole 31a from the upper side of the through hole 31a. That is, a part of the clamp member 6 is inserted and locked into the through hole 31a.

As shown in FIGS. 2, 3A, and 7, the restraining surface 31b is disposed at a wall portion of the supporter main body 31 which faces the front side. The restraining surface 31b is a rectangular flat surface. In the present embodiment, a pair of restraining surfaces 31b are provided. The pair of restraining surfaces 31b are arranged in the circumferential direction. The pair of restraining surfaces 31b face each other in the right-left direction. One restraining surface 31b on the left side of the pair of restraining surfaces 31b is positioned on the left side toward the front side. The other restraining surface 31b on the right side of the pair of restraining surfaces 31b is positioned on the right side toward the front side. That is, the pair of restraining surfaces 31b is away from each other in the right-left direction toward the front side. The pair of restraining surfaces 31b come into contact with the pair of surface to be restrained 23e of the cutting insert 2.

The gripping arm 32 protrudes from the supporter main body 31 in a direction orthogonal to the plate thickness direction. In the present embodiment, the gripping arm 32 protrudes from a substantially central portion of a wall portion of the supporter main body 31, which faces the side, in the front-rear direction to the side and extends in the circumferential direction to curve toward the front side. The gripping arm 32 extends to surround a substantially cylindrical front portion of the supporter main body 31 from the outer side in the radial direction. A front end portion of the gripping arm 32 protrudes to the front side of the supporter main body 31. That is, the gripping arm 32 includes a portion positioned on the front side of the supporter main body 31. The gripping arm 32 is elastically deformable with respect to the supporter main body 31.

The flat surface portion 3g on the arm side and the front side surface 3d are disposed at the gripping arm 32. The flat surface portion 3g on the arm side and the front side surface 3d are disposed at a wall portion of the gripping arm 32 which faces the outer side in the radial direction.

In the present embodiment, a pair of gripping arms 32 are provided. One gripping arm 32 on the left side of the pair of gripping arms 32 protrudes to the left side from a wall portion of the supporter main body 31 which faces the left side and extends to the front side along the circumferential direction. The other gripping arm 32 on the right side of the pair of gripping arms 32 protrudes to the right side from a wall portion of the supporter main body 31 which faces the right side and extends to the front side along the circumferential direction.

The gripping arm 32 has a pressing surface 32a. The pressing surface 32a is disposed at a wall portion of the front end portion of the gripping arm 32 which faces the side. The pressing surface 32a has a rectangular flat surface. In the present embodiment, the surface area of the pressing surface 32a is larger than the surface area of the restraining surface 31b.

Each of the pair of gripping arms 32 is provided with the pressing surface 32a. That is, a pair of pressing surfaces 32a are provided. The pair of pressing surfaces 32a face each other in the right-left direction. One pressing surface 32a provided at the gripping arm 32 on the left side of the pair of pressing surfaces 32a faces the right side. The other pressing surface 32a provided at the gripping arm 32 on the right side of the pair of pressing surfaces 32a faces the left side. Each of the pressing surfaces 32a expands in a direction substantially perpendicular to the right-left direction. That is, the pair of pressing surfaces 32a are substantially parallel to each other. The pair of pressing surfaces 32a come into contact with the pair of surface to be pressed 23d of the cutting insert 2. The pressing surfaces 32a of the gripping arms 32 press the surface to be pressed 23d of the cutting insert 2 from the side. That is, the gripping arms 32 press the cutting insert 2. The cutting insert 2 is sandwiched between the pair of pressing surfaces 32a.

The pocket 33 has a recessed shape recessed from a front end portion of the supporter 3 to the rear side. The pocket 33 is open to a wall portion of the supporter 3 which faces the front side and extends in the front-rear direction. In addition, the pocket 33 penetrates the supporter 3 in the plate thickness direction and is open to the pair of plate surfaces 3a and 3b. The pocket 33 is an accommodation space of the cutting insert 2 defined by the pair of restraining surfaces 31b and the pair of pressing surfaces 32a. The pocket 33 is disposed between the pair of gripping arms 32. In the present embodiment, a rear end portion of the pocket 33 and a front end portion of the through hole 31a are connected to each other. That is, the pocket 33 and the through hole 31a communicate with each other in the front-rear direction.

The slit 34 penetrates the supporter 3 in the plate thickness direction and is open to the pair of plate surfaces 3a and 3b. That is, the slit 34 is open to both sides of the supporter 3 in the plate thickness direction. The slit 34 is disposed between the supporter main body 31 and the gripping arm 32. Specifically, the slit 34 is disposed between the substantially cylindrical front portion of the supporter main body 31 and the gripping arm 32 such that the front portion of the supporter main body 31 and the gripping arm 32 are separated from each other in the radial direction.

The slit 34 extends about the center axis C1 of the supporter 3 when viewed from the plate thickness direction as shown in FIG. 3A. In the present embodiment, the slit 34 has an arc shape when viewed from the plate thickness direction. The slit 34 extends around the through hole 31a and is open to the pocket 33.

The slit 34 has a pocket opening 34a that is open to the pocket 33. The pocket opening 34a is disposed at a front end portion of the slit 34. As the slit 34 is open to the pocket 33 via the pocket opening 34a, the gripping arm 32 is supported in a state where a rear end portion thereof is cantilevered to the supporter main body 31. The pocket opening 34a is disposed between the restraining surface 31b and the pressing surface 32a. The pocket opening 34a faces a ridge portion of the outer peripheral surface 23 of the cutting insert 2 between the lateral side wall 23c and the rear side wall 23b.

In the present embodiment, a pair of slits 34 are provided. One slit 34 on the left side of the pair of slits 34 is disposed between a wall portion of the front portion of the supporter main body 31 which faces the left side (the outer side in the radial direction) and a wall portion of the one gripping arm 32 on the left side which faces the right side (the inner side in the radial direction). The pocket opening 34a of the one slit 34 is disposed between the one restraining surface 31b on the left side and the one pressing surface 32a on the left side and is open to the pocket 33 toward the right side. The other slit 34 on the right side of the pair of slits 34 is disposed between a wall portion of the front portion of the supporter main body 31 which faces the right side (the outer side in the radial direction) and a wall portion of the other gripping arm 32 on the right side which faces the left side (the inner side in the radial direction). The pocket opening 34a of the other slit 34 is disposed between the other restraining surface 31b on the right side and the other pressing surface 32a on the right side and is open to the pocket 33 toward the left side.

### [Clamp Member]

As shown in FIG. 1, the clamp member 6 fixes at least the supporter 3 of the clamp structure of a cutting insert 10 to the insert mounting seat 5. The clamp member 6 has the clamp piece 6a and the clamp screw 6b.

The clamp piece 6a is disposed on the upper side of a portion of the top surface 41 of the tool main body 4 which is positioned at the first end portion 4a. The clamp piece 6a extends in the front-rear direction. A front end portion of the clamp piece 6a is positioned on the upper side of the insert mounting seat 5. The clamp piece 6a has a screw insertion hole 6c, a slide surface 6d, and the projection 6e.

The screw insertion hole 6c penetrates the clamp piece 6a in the up-down direction. The screw insertion hole 6c is disposed at an intermediate portion of the clamp piece 6a which is positioned between both end portions in the front-rear direction.

The slide surface 6d is disposed at a rear end portion of the clamp piece 6a and faces the lower side. The slide surface 6d has an inclined flat surface shape which is positioned on the lower side toward the rear side. The slide surface 6d slidably comes into contact with the inclined surface 41a of the tool main body 4.

The projection 6e is disposed at the front end portion of the clamp piece 6a and protrudes from a lower surface of the clamp piece 6a to the lower side. The projection 6e has a columnar shape extending in the up-down direction. The projection 6e is inserted from the upper side into the through hole 31a of the supporter main body 31. A portion of an outer peripheral surface of the projection 6e which faces the rear side can come into contact with an inner peripheral surface of the through hole 31a.

The clamp screw 6b is inserted from the upper side into the screw insertion hole 6c and is screwed with a screw hole that is open to the top surface 41 of the tool main body 4. When the clamp screw 6b is screwed into the screw hole, the slide surface 6d slides on the inclined surface 41a, and the clamp piece 6a is drawn to the rear side while moving to the lower side. Accordingly, the projection 6e draws the supporter main body 31 to the rear side via the inner peripheral surface of the through hole 31a. In addition, a portion of a lower surface of the front end portion of the clamp piece 6a which is positioned around the projection 6e comes into contact with an upper surface of the supporter main body 31, that is, a part of the front surface 3a of the supporter 3 from the upper side and presses the supporter main body 31 to the lower side. In this manner, the clamp member 6 is locked to the supporter main body 31.

In addition, as the supporter 3 is drawn to the rear side by the clamp member 6, each of the flat surface portions 3g on the arm side of the pair of gripping arms 32 is pressed to the pair of side walls 5b of the insert mounting seat 5, elastically deforming the gripping arm 32. Accordingly, each of the pressing surfaces 32a of the pair of gripping arms 32 presses the pair of surface to be pressed 23d of the cutting insert 2 from the side, and the cutting insert 2 is sandwiched between the pair of gripping arms 32.

### [Operational Effects Achieved by Present Embodiment]

In the clamp structure of a cutting insert 10 and the indexable cutting tool 1 of the present embodiment described hereinbefore, as the supporter 3 holds the cutting insert 2, the outer shape of the cutting insert 2 made of an expensive hard material such as cemented carbide can be kept small. For this reason, tool costs can be reduced.

In the present embodiment, when the clamp structure of a cutting insert 10, that is, the cutting insert 2 and the supporter 3 are clamped to the insert mounting seat 5 for mounting with the clamp member 6, the gripping arm 32 elastically deforms. Specifically, as the clamp member 6 is locked to the supporter main body 31 and a drawing force to the rear side is applied to the clamp member 6, the flat surface portion 3g on the arm side of the gripping arm 32 is pressed to the side wall 5b of the insert mounting seat 5, elastically deforming the gripping arm 32. By elastically deforming the gripping arm 32, the pressing surface 32a of the gripping arm 32 presses the surface to be pressed 23d of the cutting insert 2.

Specifically, while maintaining a state where the restraining surface 31b of the supporter main body 31 is brought into contact with the surface to be restrained 23e of the cutting insert 2, the gripping arm 32 is elastically deformed, and the surface to be pressed 23d of the cutting insert 2 is pressed by the pressing surface 32a of the gripping arm 32. In the present embodiment, the restraining surface 31b and the pressing surface 32a are separated from each other by the slit 34 positioned therebetween and are relatively displaceable. For this reason, the restraining surface 31b of the supporter 3 and the surface to be restrained 23e of the cutting insert 2 can be stably brought into contact with each other, and the pressing surface 32a of the supporter 3 and the surface to be pressed 23d of the cutting insert 2 can be stably brought into contact with each other. That is, the surface to be restrained 23e and the surface to be pressed 23d of the cutting insert 2 can be stably pressed by the restraining surface 31b and the pressing surface 32a of the supporter 3.

From the above, in the present embodiment, the cutting insert 2 can be stably held while making the size of the cutting insert 2 small and reducing costs.

In addition, in the present embodiment, the cutting insert 2 has a front-back inverted symmetrical shape in the plate thickness direction and has a front-rear inverted symmetrical shape in the front-rear direction.

In this case, since at least four cutting edges 24 are disposed for one cutting insert 2, tool life of the cutting insert 2 can be extended.

In addition, in the present embodiment, the cutting insert 2 has a hexagonal prismatic shape, the surface to be restrained 23e is disposed at the rear side wall 23b of the outer peripheral surface 23, and the surface to be pressed 23d is disposed at at least the lateral side wall 23c of the outer peripheral surface 23.

In this case, the rear side wall 23b and the lateral side wall 23c of the outer peripheral surface 23 of the cutting insert 2 can be held by the supporter 3. A state where the cutting insert 2 is held by the supporter 3 becomes stable.

In addition, in the present embodiment, a part (projection 6e) of the clamp member 6 is inserted and locked into the through hole 31a of the supporter main body 31.

In this case, with a simple structure, the clamp member 6 can be locked to the supporter main body 31.

In addition, in the present embodiment, the supporter 3 has a rectangular plate shape, and the center axis of the through hole 31a is coaxially disposed with the center axis C1 of the supporter 3. In addition, since the rear end portion of the cutting insert 2 is positioned on the front side of the center axis C1, interference between the cutting insert 2 and the projection 6e of the clamp piece 6a can be suppressed.

In this case, for example, the clamp structure of a cutting insert 10 of the present embodiment is applicable to an existing indexable cutting tool in which a rectangular plate-shaped cutting insert is mounted on an insert mounting seat according to general ISO standards. That is, a product according to the embodiment of the present invention can be mounted on an insert mounting seat of a tool main body of a product of the related art, thereby improving versatility.

In addition, in the present embodiment, the slit 34 extends about the center axis C1 of the supporter 3 when viewed from the plate thickness direction.

In this case, a displacement amount of the pressing surface 32a when the gripping arm 32 has elastically deformed, in particular, a displacement amount to the side can be greatly ensured, and the cutting insert 2 can be stably held by the gripping arm 32.

In addition, in the present embodiment, the slit 34 has an arc shape when viewed from the plate thickness direction.

In this case, occurrence of stress concentration in a part of the slit 34 is suppressed, and damage or the like of the supporter 3 starting from the slit 34 is suppressed.

In addition, in the present embodiment, the pair of gripping arms 32 are provided, and the pocket 33 is disposed between the pair of gripping arms 32.

In this case, as each of the pair of gripping arms 32 elastically deforms, a relative displacement amount of each of the pressing surfaces 32a of the pair of gripping arms 32 is greatly ensured. For this reason, work of attaching and detaching the cutting insert 2 to the pocket 33 is easy. In particular, when the size of the cutting insert 2 is small as in the present embodiment, it is conceivable that the cutting insert 2 unintentionally falls or is lost at a time of attaching and detaching with respect to the supporter 3, but such falling or loss is suppressed since detachability is improved with the configuration.

In addition, in the present embodiment, the pocket 33 and the through hole 31a communicate with each other.

In this case, a front end portion (a part of a surrounding wall) of the substantially cylindrical front portion of the supporter main body 31 is separated in the right-left direction with the pocket 33 and the through hole 31a. Since the pair of restraining surfaces 31b are individually displaceable, adhesion between each restraining surface 31b and each surface to be restrained 23e can be further improved.

### [Other Configurations Included in Present Invention 1]

The present invention is not limited to the first embodiment of the present invention described above. For example, as will be described below, the configurations can be changed or the like without departing from the scope of the present invention. In showing of modification examples, the same components as in the embodiment described above will be assigned with the same reference numerals, and main differences will be described below.

Although an example in which the cutting insert 2 has a hexagonal prismatic shape is given in the embodiment described above, the invention is not limited thereto. The cutting insert 2 may have, for example, an octagonal prismatic shape or the like other than a hexagonal prismatic shape.

In addition, although an example in which the cutting insert 2 is a double sided type having a front-back inverted symmetrical shape is given, the invention is not limited thereto. The cutting insert 2 may be a single-sided type not having a front-back inverted symmetrical shape.

Although an example in which the clamp member 6 has the clamp piece 6a and the clamp screw 6b is given in the embodiment described above, the invention is not limited thereto. As will be described in a second embodiment to be described later, the clamp member may have, for example, an L-shaped clamp lever. In this case, the clamp lever is inserted and locked into the through hole 31a from the lower side of the supporter 3, and a drawing force to the rear side is applied to the supporter 3.

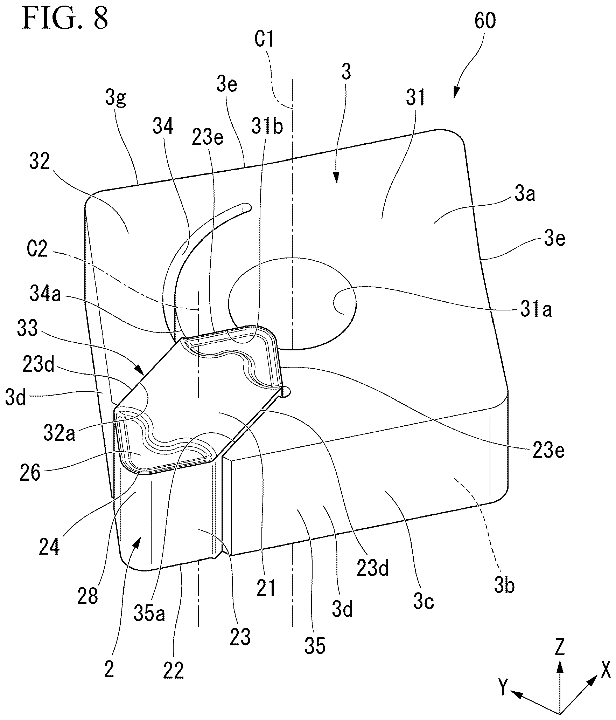

FIG. 8 is a perspective view showing a clamp structure of a cutting insert 60 according to a first modification example of the first embodiment described above. In the first modification example, one gripping arm 32 and one slit 34 are provided for the supporter 3.

Specifically, in the first modification example shown in FIG. 8, the supporter 3 has the one gripping arm 32 on the left side of the pair of gripping arms 32 described in the first embodiment described above and does not have the other gripping arm 32 on the right side. In addition, the supporter 3 has the one slit 34 on the left side of the pair of slits 34 and does not have the other slit 34 on the right side. The supporter 3 of the first modification example has a fixing arm 35 fixed to the supporter main body 31 instead of the other gripping arm 32 and the other slit 34.

The fixing arm 35 is disposed on the right side of the supporter main body 31 and is connected to the supporter main body 31. A front end portion of the fixing arm 35 protrudes to the front side of the supporter main body 31. That is, the fixing arm 35 includes a portion positioned on the front side of the supporter main body 31.

The fixing arm 35 has a support surface 35a. The support surface 35a is disposed at a portion of the fixing arm 35 which protrudes to the front side of the supporter main body 31. The support surface 35a is disposed at a wall portion of the front end portion of the fixing arm 35 which faces the side. The support surface 35a is a rectangular flat surface. In the first modification example, the surface area of the support surface 35a is larger than the surface area of the restraining surface 31b. The support surface 35a expands in the direction substantially perpendicular to the right-left direction.

The support surface 35a of the fixing arm 35 faces the pressing surface 32a of the gripping arm 32 in right-left direction. In the first modification example, the support surface 35a and the pressing surface 32a are substantially parallel to each other. The support surface 35a of the fixing arm 35 supports the surface to be pressed 23d of the cutting insert 2 from the side. That is, the fixing arm 35 supports the cutting insert 2. Specifically, the support surface 35a comes into contact with the surface to be pressed 23d of the cutting insert 2 which faces the right side. In addition, the pressing surface 32a of the gripping arm 32 comes into contact with the surface to be pressed 23d of the cutting insert 2 which faces the left side. The cutting insert 2 is sandwiched between the pressing surface 32a and the support surface 35a.

The pocket 33 is disposed between the gripping arm 32 and the fixing arm 35. The pocket 33 is defined by the pair of restraining surfaces 31b, the pressing surface 32a, and the support surface 35a.

In the first modification example, the same operational effects as in the first embodiment described above are obtained while simplifying the structure of the clamp structure of a cutting insert 60.

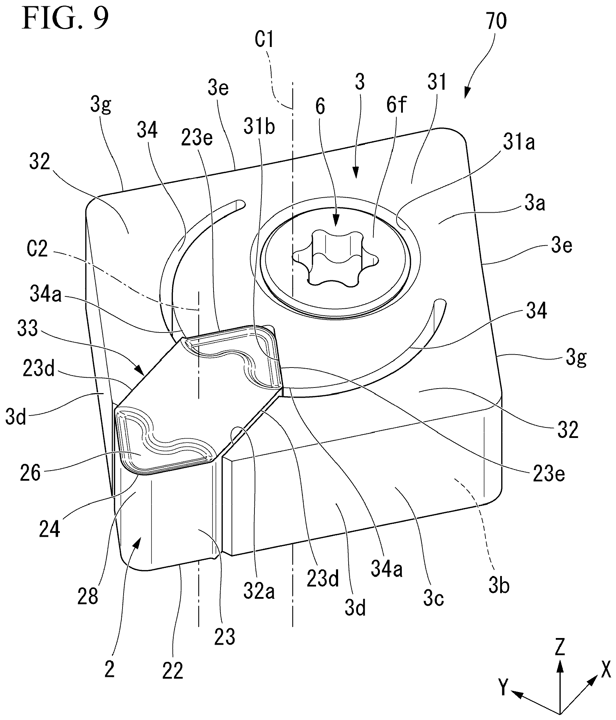

FIG. 9 is a perspective view showing a clamp structure of a cutting insert 70 according to a second modification example of the first embodiment described above. In the second modification example, the center axis of the through hole 31a of the supporter main body 31 is positioned on the rear side of the center axis C1 of the supporter 3. In addition, the through hole 31a has, at an opening portion on an upper side thereof, a tapered surface of which a diameter expands toward the upper side. In addition, in the second modification example, the pocket 33 and the through hole 31a do not communicate with each other. For this reason, the pair of restraining surfaces 31b are connected to each other in the right-left direction.

In the second modification example, the clamp member 6 has a countersunk screw 6f instead of the clamp piece 6a and the clamp screw 6b. The countersunk screw 6f has, at a lower surface of a head portion thereof, a tapered surface of which a diameter expands toward the upper side. In addition, although particularly not shown, a screw hole is open to the portion of the top surface 41 of the tool main body 4 which is positioned at the first end portion 4a. The screw hole extends in the up-down direction. A center axis of the screw hole is positioned on the rear side of the center axis of the through hole 31a.

In the second modification example, the countersunk screw 6f is inserted from the upper side of the through hole 31a and is screwed into the screw hole. Then, a portion of the tapered surface of the head portion of the countersunk screw 6f which faces the rear side presses a portion of the tapered surface of the opening portion of the through hole 31a which faces the front side, and a drawing force to the rear side is applied to the supporter 3. As the supporter 3 is drawn to the rear side by the clamp member 6, each of the flat surface portions 3g on the arm side of the pair of gripping arms 32 is pressed to the pair of side walls 5b of the insert mounting seat 5, elastically deforming the gripping arm 32. Accordingly, each of the pressing surfaces 32a of the pair of gripping arms 32 presses the pair of surface to be pressed 23d of the cutting insert 2 from the side, and the cutting insert 2 is clamped to a space between the pair of gripping arms 32. Also in the second modification example, the same operational effects as in the first embodiment described above are obtained.

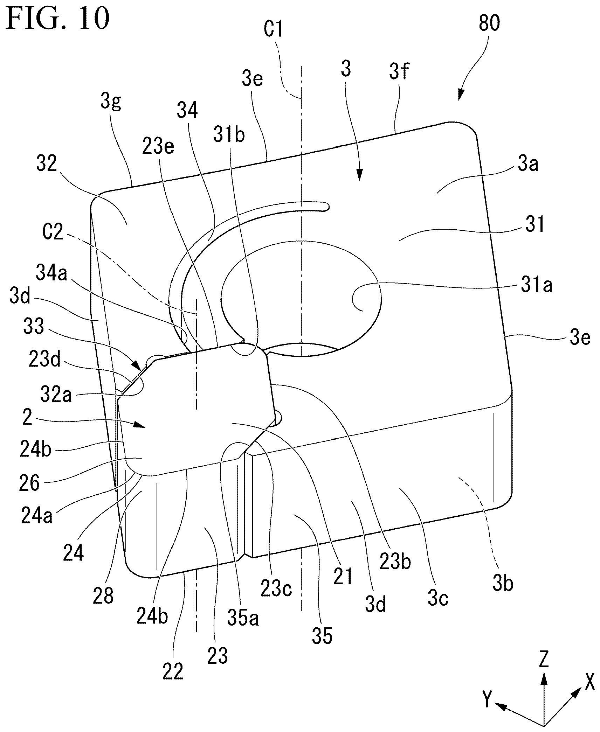

FIGS. 10 to 12 show a clamp structure of a cutting insert 80, the cutting insert 2, and the supporter 3 according to a third modification example of the first embodiment described above. In the third modification example, as in the first modification example described above, one gripping arm 32 and one slit 34 are provided for the supporter 3. For this reason, the same operational effects as in the first modification example described above are obtained. In addition, in the third modification example, configurations are different from the first embodiment and the first modification example described above in terms of the following points.

In the first embodiment and the first modification example described above, when viewed from the insert axial direction as shown in FIG. 6A, in the hexagonal outer peripheral surface 23 of the cutting insert 2, the length of one side corresponding to the lateral side wall 23c is larger than the length of the other side corresponding to the rear side wall 23b. In addition, the surface to be restrained 23e of the cutting insert 2 is disposed only at the rear side wall 23b, and the surface to be pressed 23d is disposed only at the lateral side wall 23c. In addition, as shown in FIG. 7, the pressing surface 32a of the gripping arm 32 is configured by one flat surface portion.

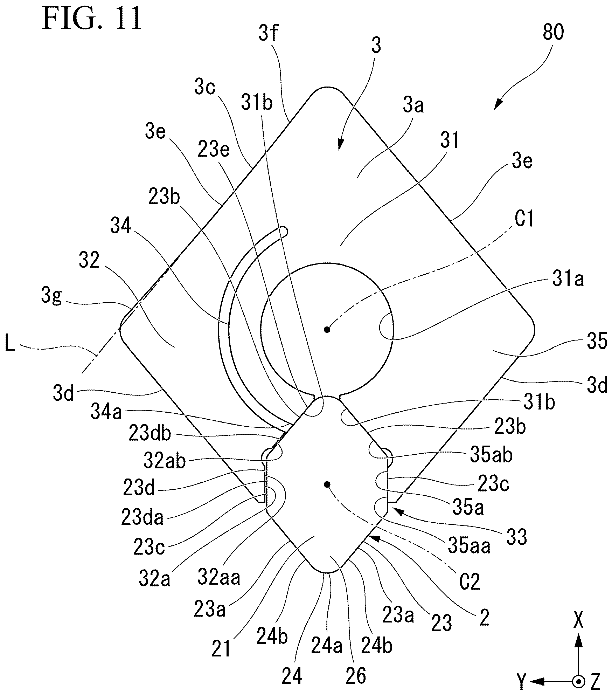

On the contrary, in the third modification example, when viewed from the insert axial direction as shown in FIG. 11, in the hexagonal outer peripheral surface 23 of the cutting insert 2, the length of the one side corresponding to the lateral side wall 23c is smaller than the length of the other side corresponding to the rear side wall 23b. In addition, in the third modification example, the surface to be restrained 23e of the cutting insert 2 is disposed at a rear portion of the rear side wall 23b, and the surface to be pressed 23d is disposed over the lateral side wall 23c and a front portion of the rear side wall 23b. That is, in the third modification example, the surface to be pressed 23d has a portion 23da disposed at the lateral side wall 23c and a portion 23db disposed at the rear side wall 23b. That is, the surface to be pressed 23d has two flat surface portions.

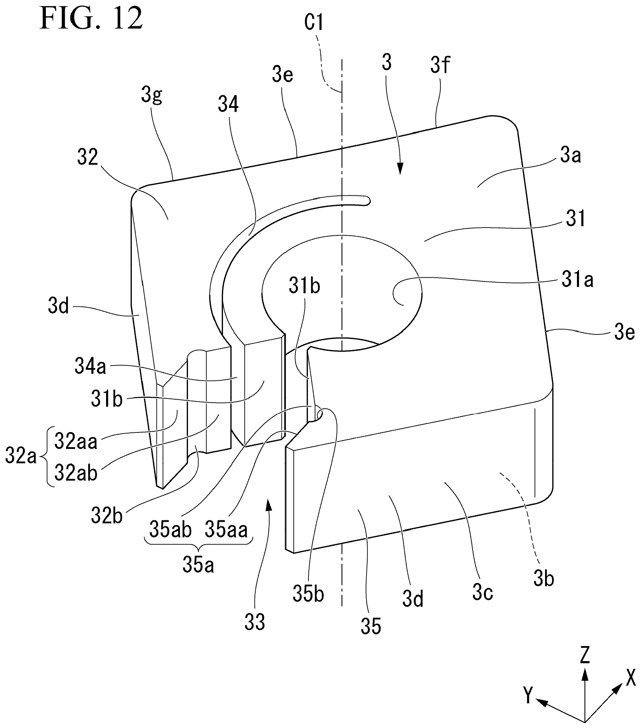

In addition, the pressing surface 32a of the gripping arm 32 has a recessed V-shape when viewed from the plate thickness direction of the supporter 3. As shown in FIGS. 11 and 12, the pressing surface 32a has a front pressing surface portion 32aa that comes into contact with the portion 23da of the surface to be pressed 23d disposed at the lateral side wall 23c and a rear pressing surface portion 32ab that comes into contact with the portion 23db of the surface to be pressed 23d disposed at the rear side wall 23b. Each of the front pressing surface portion 32aa and the rear pressing surface portion 32ab has a flat surface shape. The front pressing surface portion 32aa may be rephrased as a first flat surface portion 32aa, or the rear pressing surface portion 32ab may be rephrased as a second flat surface portion 32ab. The one restraining surface 31b of the pair of restraining surfaces 31b which is disposed on the left side is separated from the rear pressing surface portion 32ab with the slit 34. Also in the third modification example, the surface area of the entire pressing surface 32a is larger than the surface area of the one restraining surface 31b.

In addition, the gripping arm 32 has, in the wall portion of the front end portion of the gripping arm 32 which faces the side, a concave hollow portion 32b that is positioned between the front pressing surface portion 32aa and the rear pressing surface portion 32ab. The hollow portion 32b has a groove shape extending in the plate thickness direction. The hollow portion 32b faces a ridge portion of the outer peripheral surface 23 of the cutting insert 2 where the lateral side wall 23c and the rear side wall 23b are connected to each other with a gap therebetween. As the hollow portion 32b is provided, contact between the ridge portion of the cutting insert 2 and the pressing surface 32a of the gripping arm 32 is suppressed.

In addition, the support surface 35a of the fixing arm 35 has a recessed V-shape when viewed from the plate thickness direction of the supporter 3. The support surface 35a has a front support surface portion 35aa that comes into contact with the portion 23da of the surface to be pressed 23d disposed at the lateral side wall 23c and a rear support surface portion 35ab that comes into contact with the portion 23db of the surface to be pressed 23d disposed at the rear side wall 23b. Each of the front support surface portion 35aa and the rear support surface portion 35ab has a flat surface shape. The front support surface portion 35aa may be rephrased as a third flat surface portion 35aa, or the rear support surface portion 35ab may be rephrased as a fourth flat surface portion 35ab. Of the pair of restraining surfaces 31b, the other restraining surface 31b disposed on the right side and the rear support surface portion 35ab are connected to each other and are arranged on one flat surface. Also in the third modification example, the surface area of the entire support surface 35a is larger than the surface area of the one restraining surface 31b.

In addition, the fixing arm 35 has, in the wall portion of the front end portion of the fixing arm 35 which faces the side, a concave hollow portion 35b that is positioned between the front support surface portion 35aa and the rear support surface portion 35ab. The hollow portion 35b has a groove shape extending in the plate thickness direction. The hollow portion 35b faces a ridge portion of the outer peripheral surface 23 of the cutting insert 2 where the lateral side wall 23c and the rear side wall 23b are connected to each other with a gap therebetween. As the hollow portion 35b is provided, contact between the ridge portion of the cutting insert 2 and the support surface 35a of the fixing arm 35 is suppressed.

In the third modification example, a clamping force of the cutting insert 2 can be further increased.

### <Second Embodiment>

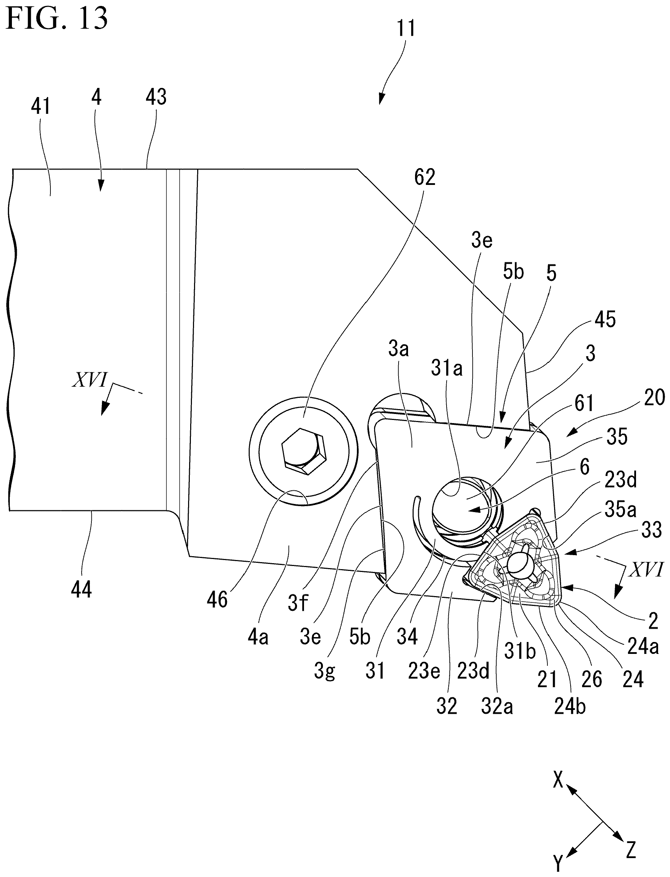

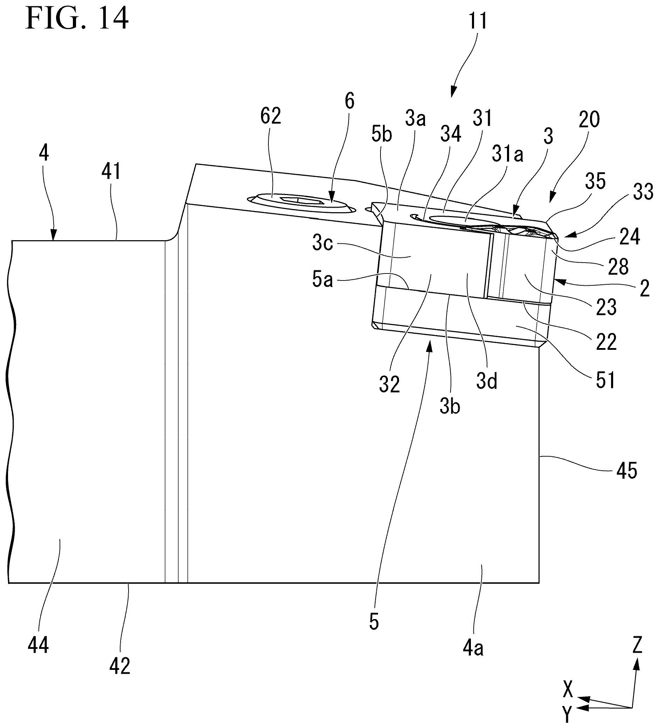

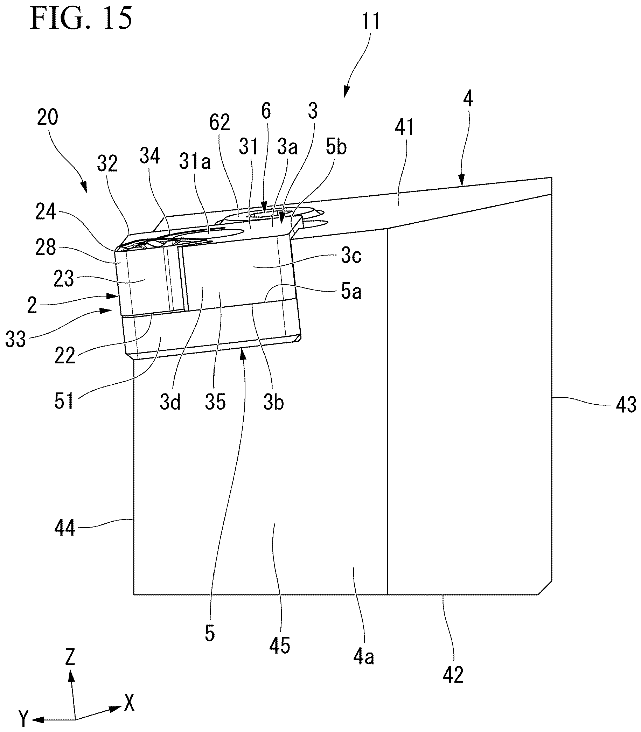

Next, a clamp structure of a cutting insert 20 and an indexable cutting tool 11 including the clamp structure of a cutting insert according to a second embodiment of the present invention will be described with reference to FIGS. 13 to 23. In the present embodiment, the same configurations as in the first embodiment and the first to third modification examples described above will be assigned with the same names or reference numerals, and description thereof will be omitted in some cases. In addition, definitions of directions are the same as in the embodiment or the like described above unless otherwise specified.

As shown in FIGS. 13 to 15, the indexable cutting tool 11 of the present embodiment is different from the indexable cutting tool 1 described in the first embodiment described above in terms of handedness when using the tool. Specifically, the indexable cutting tool 11 of the second embodiment is left-handed while the indexable cutting tool 1 of the first embodiment is right-handed.

The term "handedness" will be described in detail below. When the tool is viewed from the front end side in the tool axial direction, a case where a main cutting edge (linear cutting portion 24b) of the cutting edge 24 is disposed to project from the tool main body 4 to the right side in a tool posture in which the rake face 26 of the cutting insert 2 faces the upper side in a vertical direction is right-handed. When the tool is viewed from the front end side in the tool axial direction, a case where the main cutting edge (linear cutting portion 24b) of the cutting edge 24 is disposed to project from the tool main body 4 to the left side in the tool posture is left-handed.

In addition, the indexable cutting tool 11 of the present embodiment is different from the indexable cutting tool 1 described in the first embodiment described above in terms of each of configurations of the tool main body 4, the pocket 33, the through hole 31a, the cutting insert 2, the clamp member 6, and the like.

### [Tool Main Body]

In the present embodiment, a portion of the other lateral surface 44 facing the left side (+Y side) which is positioned at the first end portion 4a of the tool main body 4 protrudes to the left side of portions other than the first end portion 4a.

The insert mounting seat 5 is open to the top surface 41, the other lateral surface 44, and the front end surface 45, at the first end portion 4a, that is, the front end portion of the tool main body 4. The insert mounting seat 5 has a recessed shape recessed from the top surface 41, the other lateral surface 44, and the front end surface 45 of the tool main body 4.

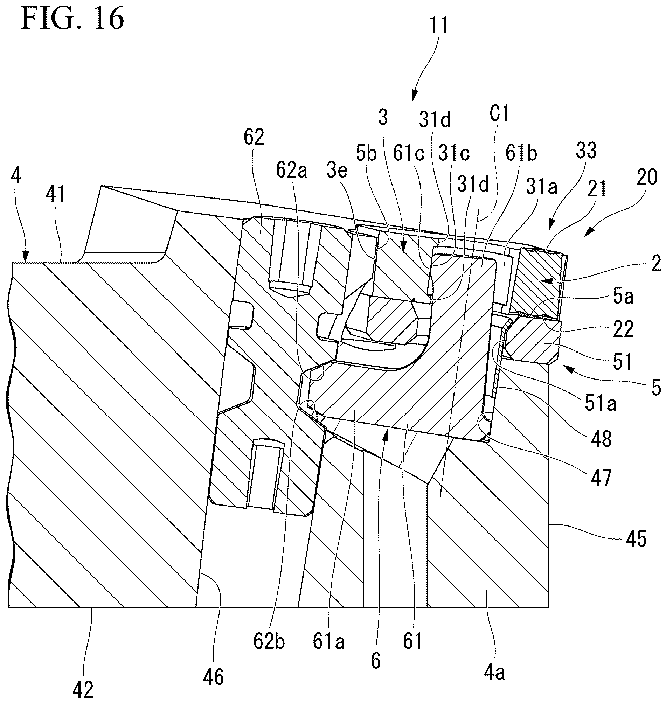

As shown in FIG. 16, the tool main body 4 has a female screw hole 46, a lever accommodating unit 47, and a washer member 48.

The female screw hole 46 is disposed in the first end portion 4a of the tool main body 4. The female screw hole 46 is positioned on the posterior end side of the insert mounting seat 5 and is disposed adjacent to the insert mounting seat 5. The female screw hole 46 extends substantially in the up-down direction and specifically, extends substantially parallel to the center axis C1 of the supporter 3. Both end portions of the female screw hole 46 are open to the top surface 41 and the bottom surface 42 of the tool main body 4. The female screw hole 46 has a female screw portion in an inner peripheral surface.

The lever accommodating unit 47 is a recessed portion or a hole disposed inside the first end portion 4a of the tool main body 4. The lever accommodating unit 47 accommodates a part of a clamp lever 61, which is to be described later, of the clamp member 6. The lever accommodating unit 47 extends in the radial direction orthogonal to the center axis C1. Specifically, the lever accommodating unit 47 extends substantially in the tool axial direction.

An end portion of the lever accommodating unit 47 on the front end side overlaps a sheet hole 51a of the sheet member 51 and the through hole 31a of the supporter 3 when viewed from the up-down direction. A front end portion of the lever accommodating unit 47 communicates with the through hole 31a of the supporter 3 through the sheet hole 51a of the sheet member 51.

An end portion of the lever accommodating unit 47 on the posterior end side is connected to the female screw hole 46. A posterior end portion of the lever accommodating unit 47 communicates with the female screw hole 46.

The washer member 48 has, for example, a cylindrical shape split in half. The washer member 48 is made of a material softer than the sheet member 51 and is made of a metal such as a steel material. The washer member 48 extends in the up-down direction centered on the supporter center axis C1. The washer member 48 is disposed over the sheet hole 51a and the front end portion of the lever accommodating unit 47. The washer member 48 is disposed at at least a portion of each of the sheet hole 51a and the lever accommodating unit 47 which are positioned on the front end side of the center axis C1. The washer member 48 suppresses contact between the clamp lever 61 to be described later and the sheet member 51.

### [Cutting Insert]

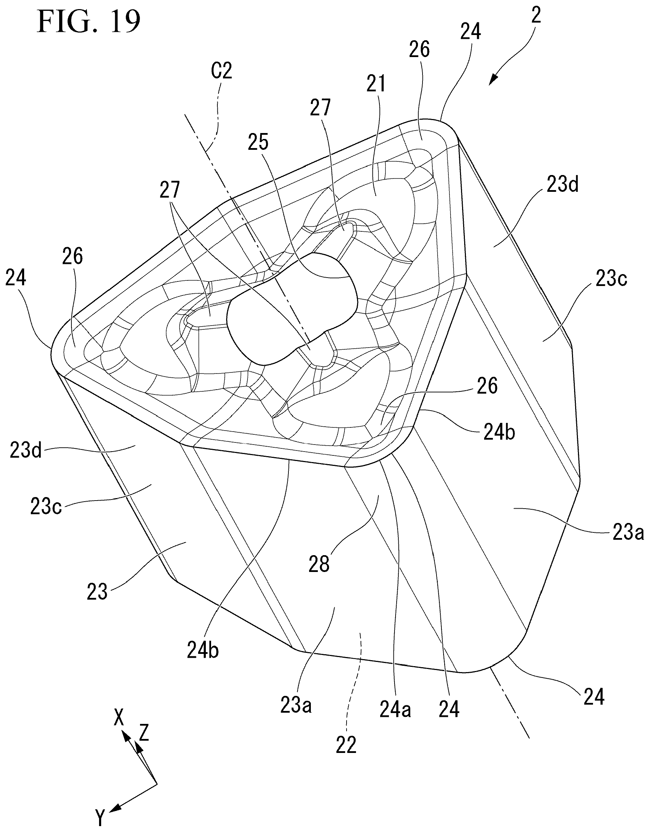

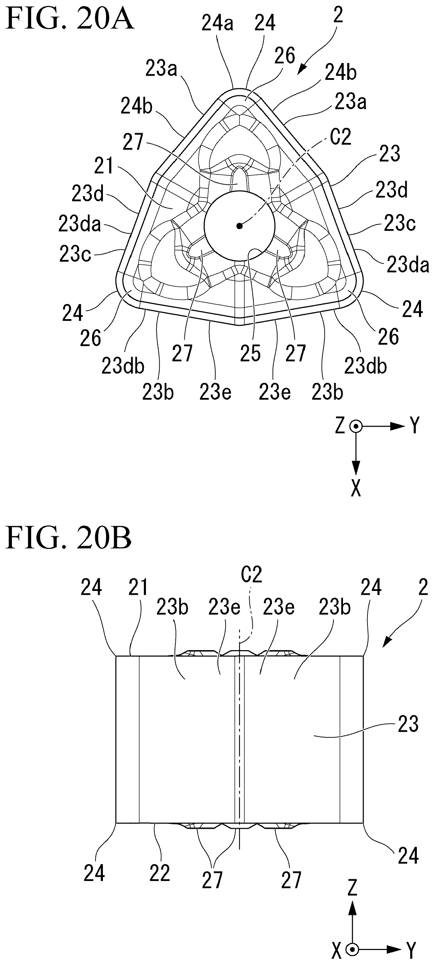

As shown in FIGS. 19 and 20A to 20C, the cutting insert 2 of the present embodiment has a trigon type hexagonal prismatic shape (hexagonal plate shape) centered on the insert center axis C2. In plan view shown in FIG. 20A, the cutting insert 2 has, at an outer peripheral portion thereof, three corner parts having an acute angle and three corner parts having an obtuse angle which are alternately arranged about the insert center axis C2. That is, the cutting insert 2 has, at the outer peripheral portion thereof, in total six corner parts.

The cutting insert 2 has an insert through hole 25 that penetrates the cutting insert 2 in the up-down direction. The insert through hole 25 has a circular hole shape centered on the insert center axis C2 and extends in the up-down direction. Both end portions of the insert through hole 25 are open to the front surface 21 and the back surface 22 of the cutting insert 2.

The front surface 21 has a polygonal shape and in the present embodiment, has a trigon type hexagonal shape. The rake face 26 is disposed at at least the corner part of the front surface 21 which has an acute angle.

The back surface 22 has a polygonal shape and in the present embodiment, has a trigon type hexagonal shape. The back surface 22 has a plurality of seating surfaces 27. The plurality of seating surfaces 27 are disposed at positions rotationally symmetrical to each other about the insert center axis C2 when viewed from the insert axial direction. That is, the plurality of seating surfaces 27 are disposed at equal pitches in the insert circumferential direction. In the present embodiment, three seating surfaces 27 are provided at the back surface 22. Each seating surface 27 is disposed on a virtual straight-line (not shown) connecting the insert center axis C2 and each corner part having an acute angle when viewed from the insert axial direction.

The seating surface 27 is disposed on the outer side of the insert through hole 25 in the radial direction at the back surface 22. In the present embodiment, the seating surface 27 is disposed adjacent to the insert through hole 25. The seating surface 27 extends in the insert radial direction when viewed from the insert axial direction. That is, the plurality of seating surfaces 27 extend radially about the insert center axis C2.

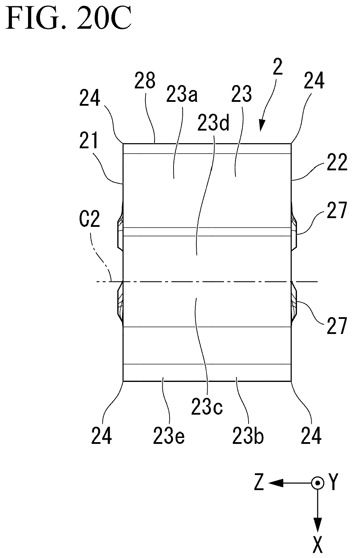

As shown in FIGS. 20B and 20C, the seating surface 27 protrudes in the insert axial direction more than a portion of the back surface 22 other than the seating surface 27. When the cutting insert 2 is mounted on the insert mounting seat 5, each seating surface 27 comes into contact with the bottom wall 5a of the insert mounting seat 5.

As shown in FIG. 20A, the surface to be restrained 23e of the cutting insert 2 is disposed at the rear portion of the rear side wall 23b. The surface to be pressed 23d of the cutting insert 2 is disposed over the lateral side wall 23c and the front portion of the rear side wall 23b. That is, the surface to be pressed 23d has the portion 23da disposed at the lateral side wall 23c and the portion 23db disposed at the rear side wall 23b. That is, the surface to be pressed 23d has two flat surface portions.

The cutting edge 24 is disposed at the corner part of the cutting insert 2 which has an acute angle. The cutting edge 24 has the corner cutting portion 24a and the pair of linear cutting portions 24b. When viewed from the insert axial direction (up-down direction), the angle formed between the pair of linear cutting portions 24b is, for example, 80°.

In the present embodiment, the cutting insert 2 has a front-back inverted symmetrical shape in the insert axial direction, that is, the up-down direction. In addition, the cutting insert 2 has a 120° rotationally symmetrical shape centered on the insert center axis C2. For this reason, the cutting insert 2 is provided with the plurality of cutting edges 24. Specifically, in total six cutting edges 24 are provided with corner parts, three corner parts having an acute angle at the front surface 21 and three corner parts having an acute angle at the back surface 22.

### [Supporter]

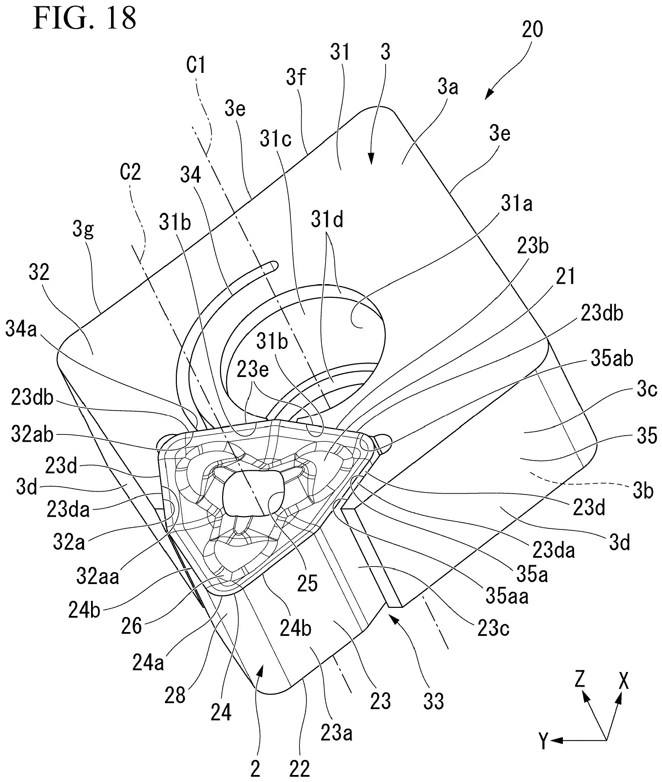

As shown in FIGS. 18 and 21 to 23, the supporter 3 has the supporter main body 31, the gripping arm 32, the pocket 33, the slit 34, and the fixing arm 35.

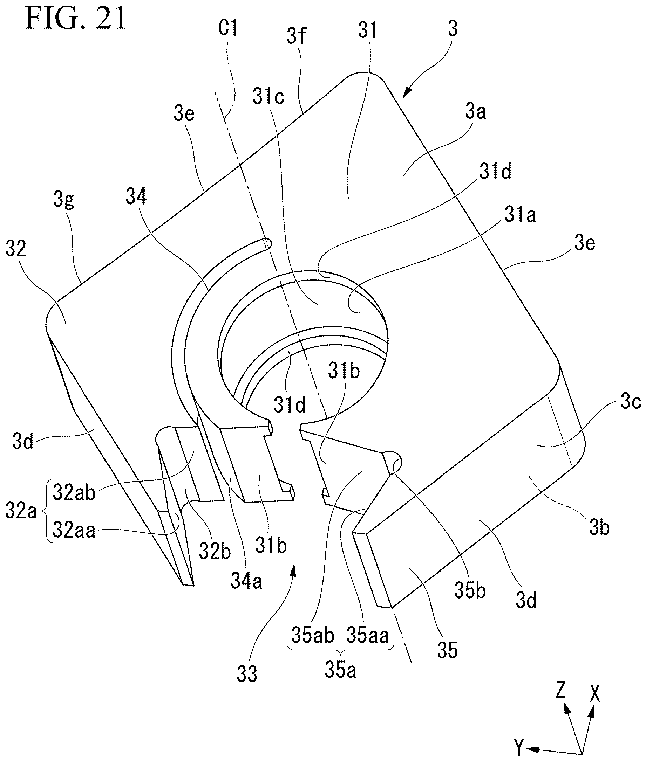

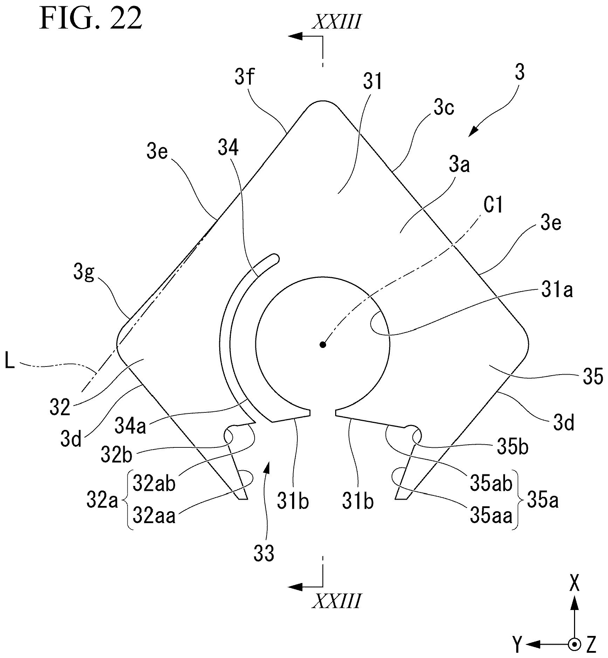

As shown in FIGS. 21 and 22, in the present embodiment, the pressing surface 32a of the gripping arm 32 has the front pressing surface portion 32aa and the rear pressing surface portion 32ab. The front pressing surface portion 32aa extends rightward toward the front side when viewed from the up-down direction. As shown in FIG. 18, the front pressing surface portion 32aa comes into contact with the portion 23da of the surface to be pressed 23d of the cutting insert 2 which is disposed at the lateral side wall 23c. The rear pressing surface portion 32ab comes into contact with the portion 23db of the surface to be pressed 23d of the cutting insert 2 which is disposed at the rear side wall 23b.

As shown in FIGS. 21 and 22, in the present embodiment, the support surface 35a of the fixing arm 35 has the front support surface portion 35aa and the rear support surface portion 35ab. The front support surface portion 35aa extends leftward toward the front side when viewed from the up-down direction. As shown in FIG. 18, the front support surface portion 35aa comes into contact with the portion 23da of the surface to be pressed 23d of the cutting insert 2 which is disposed at the lateral side wall 23c. The rear support surface portion 35ab comes into contact with the portion 23db of the surface to be pressed 23d of the cutting insert 2 which is disposed at the rear side wall 23b.

In the present embodiment, a distance between the front pressing surface portion 32aa of the gripping arm 32 and the front support surface portion 35aa of the fixing arm 35 in the right-left direction decreases toward the front side. For this reason, the cutting insert 2 held by the pocket 33 cannot be pulled out toward the front side. In the present embodiment, the cutting insert 2 can be pulled out from the pocket 33 to the upper side.

As shown in FIG. 16, a part of the clamp member 6 is inserted from the lower side into the through hole 31a of the supporter 3. The through hole 31a has a surface to be contacted 31c and a stopper 31d.

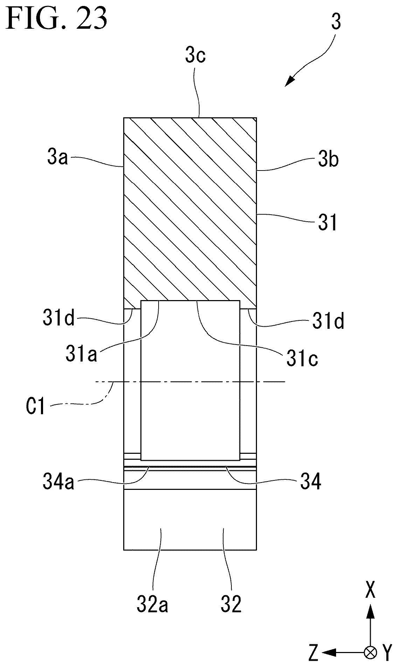

The surface to be contacted 31c is disposed at the inner peripheral surface of the through hole 31a and comes into contact with a part of the clamp member 6. The surface to be contacted 31c is disposed at at least a posterior end portion of the inner peripheral surface of the through hole 31a. As shown in FIG. 23, in the present embodiment, the surface to be contacted 31c is disposed over substantially the entire periphery of the inner peripheral surface of the through hole 31a in the circumferential direction. That is, the surface to be contacted 31c has a substantially circular hole shape centered on the center axis C1. The surface to be contacted 31c is disposed at a portion of the through hole 31a other than a lower end portion. In the present embodiment, the surface to be contacted 31c is disposed at an intermediate portion positioned between both end portions of the through hole 31a in the up-down direction.

As shown in FIG. 16, the stopper 31d is disposed on the lower side of the surface to be contacted 31c at the inner peripheral surface of the through hole 31a and protrudes more than the surface to be contacted 31c into the through hole 31a. That is, the stopper 31d protrudes to the inner side of the surface to be contacted 31c in the radial direction. The stopper 31d is disposed at at least the posterior end portion of the inner peripheral surface of the through hole 31a. For this reason, the stopper 31d protrudes toward at least the front side of the surface to be contacted 31c. As shown in FIG. 23, in the present embodiment, the stopper 31d is disposed over substantially the entire periphery of the inner peripheral surface of the through hole 31a in the circumferential direction. That is, the stopper 31d has a substantially circular ring shape centered on the center axis C1. The stopper 31d is disposed at at least the lower end portion of the through hole 31a.

In the present embodiment, the inner diameter dimension (diameter) of the stopper 31d in the through hole 31a is the same as the inner diameter dimension of the through hole of the rectangular plate-shaped cutting insert (diamond-shaped insert) according to the ISO standards. In addition, the inner diameter dimension of the surface to be contacted 31c is larger than the inner diameter dimension of the stopper 31d by, for example, less than several mm (in the present embodiment, approximately 0.6 mm in diameter). However, without being limited thereto, for example, the inner diameter dimension of the surface to be contacted 31c in the through hole 31a may be the same as the inner diameter dimension of the through hole of the cutting insert according to the ISO standards.

The through hole 31a has an up-down inverted symmetrical shape. For this reason, in the present embodiment, a pair of stoppers 31d are provided on the lower side and the upper side of the surface to be contacted 31c.

### [Clamp Member]

As shown in FIG. 16, the clamp member 6 of the present embodiment has a lever lock mechanism. The clamp member 6 has the clamp lever 61 and a fastening screw 62. The clamp lever 61 and the fastening screw 62 are disposed at the first end portion 4a of the tool main body 4.

The clamp lever 61 is a member that bends in an L-shape. The clamp lever 61 has a first extension portion 61a, a second extension portion 61b, and a projection 61c.

The first extension portion 61a is disposed at the lever accommodating unit 47. The first extension portion 61a extends in the radial direction. Specifically, the first extension portion 61a extends substantially in the tool axial direction. A posterior end portion of the first extension portion 61a protrudes into the female screw hole 46.

The second extension portion 61b extends substantially in the up-down direction. A lower end portion of the second extension portion 61b is connected to a front end portion of the first extension portion 61a. The second extension portion 61b is disposed over the front end portion of the lever accommodating unit 47, the sheet hole 51a of the sheet member 51, and the through hole 31a of the supporter 3. That is, the second extension portion 61b is inserted from the lower side into the through hole 31a.

The projection 61c is disposed at an upper end portion of the second extension portion 61b. The projection 61c protrudes at least toward the rear side from an outer peripheral surface of the second extension portion 61b. The projection 61c comes into contact with the surface to be contacted 31c of the through hole 31a.

The fastening screw 62 extends substantially in the up-down direction. The fastening screw 62 has a male screw portion screwed with the female screw portion of the female screw hole 46. That is, the fastening screw 62 is screwed with the female screw hole 46. The fastening screw 62 has an upper tapered surface 62a and a lower tapered surface 62b.

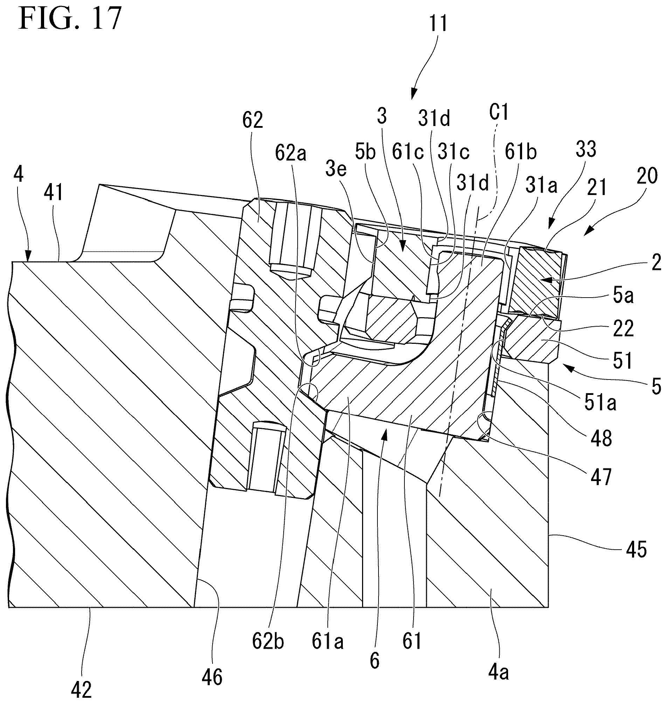

The upper tapered surface 62a has a tapered surface shape of which a diameter expands toward the upper side and faces the lower side. The upper tapered surface 62a is disposed on the upper side of the posterior end portion of the first extension portion 61a. As shown in FIG. 17, from a state where the upper tapered surface 62a is away from the posterior end portion of the first extension portion 61a to the upper side, the fastening screw 62 is screwed into the female screw hole 46 and is moved to the lower side. Accordingly, as shown in FIG. 16, the upper tapered surface 62a comes into contact with the posterior end portion of the first extension portion 61a from the upper side. As the fastening screw 62 is further screwed, the upper tapered surface 62a presses the posterior end portion of the first extension portion 61a to the lower side. The clamp lever 61 is rotated according to the principle of leverage, and the projection 61c presses the surface to be contacted 31c toward the rear side.

As the supporter 3 is drawn to the rear side by pressing the clamp lever 61, as shown in FIG. 13, the flat surface portion 3g on the arm side of the gripping arm 32 is pressed to the side wall 5b of the insert mounting seat 5, elastically deforming the gripping arm 32. Accordingly, the pressing surface 32a of the gripping arm 32 presses the one surface to be pressed 23d on the left side of the pair of surface to be pressed 23d of the cutting insert 2. In addition, the support surface 35a of the fixing arm 35 supports the other surface to be pressed 23d on the right side of the pair of surface to be pressed 23d of the cutting insert 2. Accordingly, the cutting insert 2 is sandwiched between the gripping arm 32 and the fixing arm 35 and is fixed to the pocket 33.

As shown in FIG. 16, the lower tapered surface 62b has a tapered surface shape of which a diameter expands toward the lower side and faces the upper side. The lower tapered surface 62b is disposed on the lower side of the posterior end portion of the first extension portion 61a. As shown in FIG. 16, from a state where the lower tapered surface 62b is away from the posterior end portion of the first extension portion 61a to the lower side, screwing of the fastening screw 62 into the female screw hole 46 is loosened, and the fastening screw 62 is moved to the upper side. Accordingly, as shown in FIG. 17, the lower tapered surface 62b comes into contact with the posterior end portion of the first extension portion 61a from the lower side. As the screwing of the fastening screw 62 is further loosened, the lower tapered surface 62b presses the posterior end portion of the first extension portion 61a to the upper side. The clamp lever 61 is rotated according to the principle of leverage, and the pressing of the projection 61c with respect to the surface to be contacted 31c is released.

As the pressing of the clamp lever 61 is released, the pressing of the cutting insert 2 by the gripping arm 32 is released. Accordingly, the cutting insert 2 can be taken out from the pocket 33 to the upper side.

### [Operational Effects Achieved by Present Embodiment]

With the clamp structure of a cutting insert 20 and the indexable cutting tool 11 of the present embodiment described hereinbefore, the same operational effects as in the embodiment and the modification examples described above are obtained.

In addition, in the present embodiment, the pocket 33 has a portion of which a width dimension in the right-left direction decreases toward the front side. Specifically, a distance between the front pressing surface portion 32aa of the pressing surface 32a of the gripping arm 32 and the front support surface portion 35aa of the support surface 35a of the fixing arm 35 in the right-left direction decreases toward the front side.

In this case, slipping of the cutting insert 2 held by the pocket 33 to the front side is suppressed. A state where the cutting insert 2 is clamped to the supporter 3 becomes more stable.

In addition, as in the present embodiment, in a case where the cutting insert 2 is removed from the pocket 33 to the upper side, due to frictional resistance between the cutting insert 2 and the pocket 33 or being caught or the like (hereinafter, abbreviated as being caught or the like in some cases), a force toward the upper side is applied to the supporter 3 in some cases. Even in such a case, in the present embodiment, since the stopper 31d comes into contact with a part (projection 61c) of the clamp member 6 from the lower side, a movement of the supporter 3 to the upper side is suppressed. For this reason, it is suppressed that the supporter 3 is unintentionally removed or dropped from the insert mounting seat 5. Occurrence of problems such as the supporter 3 being fallen or lost from the cutting tool is suppressed.

In addition, in the present embodiment, the surface to be contacted 31c is disposed at at least the posterior end portion of the inner peripheral surface of the through hole 31a, and the stopper 31d is disposed at at least the posterior end portion of the inner peripheral surface of the through hole 31a.

In this case, since a part (projection 61c) of the clamp member 6 presses the surface to be contacted 31c of the through hole 31a toward the rear side, the supporter 3 and the cutting insert 2 can be stably fixed to the insert mounting seat 5 by a pressing force toward the rear side.

In addition, when removing the cutting insert 2 from the supporter 3, a force of pulling the supporter 3 to a front upper side is applied in some cases due to being caught between the cutting insert 2 and the pocket 33 or the like. Even in such a case, with the configuration of the present embodiment, since the stopper 31d stably comes into contact with a part of the clamp member 6 from a rear lower side, the operational effects described above become more remarkable.

In addition, in the present embodiment, the through hole 31a has an up-down inverted symmetrical shape.

In this case, also in a case where the insert mounting seat 5 is disposed in a posture in which the supporter 3 is inverted upside down, the same retaining function described above is performed. Therefore, the clamp structure of a cutting insert 20 of the present embodiment is applicable to, for example, cutting tools having different directions of handedness. That is, in both of a case where the cutting tool is right-handed and a case where the cutting tool is left-handed, the same supporter 3 can be used as a common product. For this reason, versatility of the supporter 3 is improved, and member management is easy.

In addition, in the present embodiment, the surface to be contacted 31c extends on the inner peripheral surface of the through hole 31a in the circumferential direction and is disposed over substantially the entire periphery. In addition, the stopper 31d extends on the inner peripheral surface of the through hole 31a in the circumferential direction and is disposed over substantially the entire periphery.

In this case, when producing the supporter 3, the surface to be contacted 31c and the stopper 31d are easily processed in the through hole 31a. The supporter 3 can be easily manufactured.

In addition, in the present embodiment, the inner diameter dimension of the stopper 31d in the through hole 31a of the supporter 3 is the same as the inner diameter dimension of the through hole of the rectangular plate-shaped cutting insert (diamond-shaped insert) according to the ISO standards. Alternatively, the inner diameter dimension of the surface to be contacted 31c in the through hole 31a is the same as the inner diameter dimension of the through hole of the cutting insert according to the ISO standards.

In this case, for example, the clamp structure of a cutting insert 20 of the present embodiment is applicable to an existing indexable cutting tool in which a rectangular plate-shaped cutting insert is mounted on an insert mounting seat according to general ISO standards. That is, a product according to the embodiment of the present invention can be mounted on an insert mounting seat of a tool main body of a product of the related art, thereby improving versatility.

### [Other Configurations Included in Present Invention 2]

The present invention is not limited to the first and second embodiments of the present invention described above. For example, as will be described below, the configurations can be changed without departing from the scope of the present invention. In showing of modification examples to be described below, the same components as in the embodiments and the modification examples described above are assigned with the same reference numerals, and main differences will be described below.

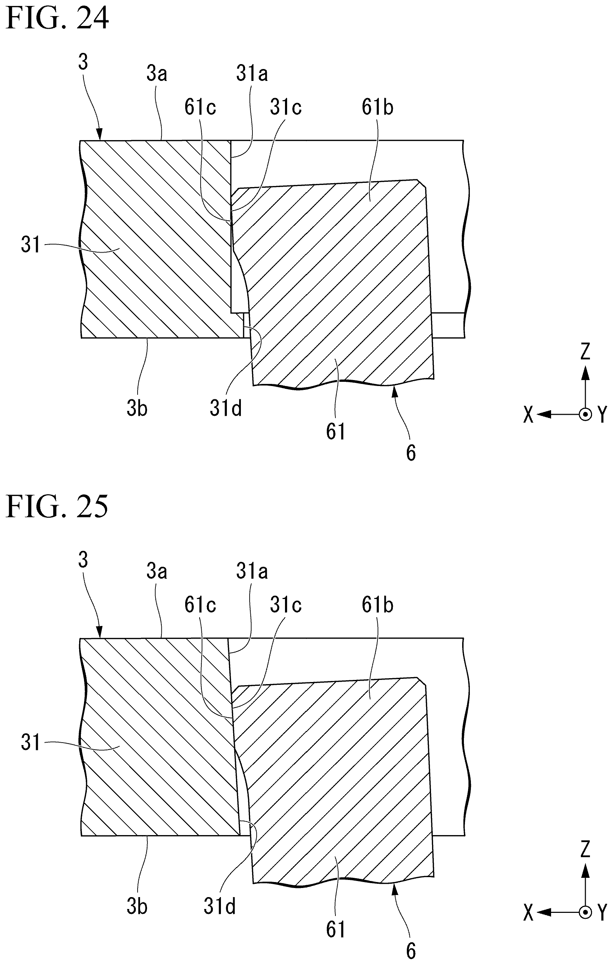

FIG. 24 is a partial cross sectional view showing a fourth modification example of the clamp structure of a cutting insert 20 of the second embodiment described above. In the fourth modification example, the through hole 31a of the supporter 3 does not have an up-down inverted symmetrical shape. One stopper 31d of the through hole 31a is provided only on the lower side of the surface to be contacted 31c.

Also in this case, the same operational effects as in the second embodiment described above are obtained.

FIG. 25 is a partial cross sectional view showing a fifth modification example of the clamp structure of a cutting insert 20 of the second embodiment described above. Also in the fifth modification example, the through hole 31a of the supporter 3 does not have an up-down inverted symmetrical shape. The inner peripheral surface of the through hole 31a has a tapered surface shape of which a diameter contracts toward the lower side. The stopper 31d is disposed on the lower side of the surface to be contacted 31c at the inner peripheral surface of the through hole 31a and protrudes more than the surface to be contacted 31c into the through hole 31a (that is, the inner side in the radial direction).

Also in this case, the same operational effects as in the second embodiment described above are obtained.

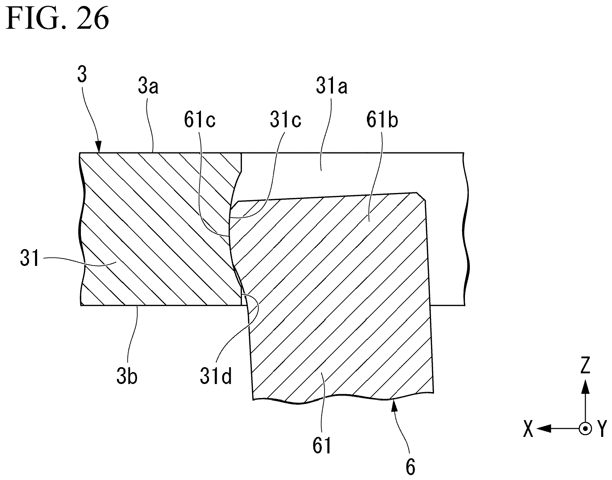

FIG. 26 is a partial cross sectional view showing a sixth modification example of the clamp structure of a cutting insert 20 of the second embodiment described above. In the sixth modification example, the through hole 31a has a dimple-shaped recessed portion in the inner peripheral surface thereof. The recessed portion is disposed at at least the posterior end portion of the inner peripheral surface of the through hole 31a. A plurality of recessed portions may be provided in the inner peripheral surface of the through hole 31a at a distance from each other in the circumferential direction. The surface to be contacted 31c is disposed at at least a part (a deepest portion or the like) of the recessed portion. The stopper 31d is disposed on the lower side of the surface to be contacted 31c and projects to the inner side of the surface to be contacted 31c in the radial direction.

Also in this case, the same operational effects as in the second embodiment described above are obtained.

In addition, although an example in which each of an angle formed between the pair of linear cutting portions 24b of the cutting edge 24 of the cutting insert 2, an angle formed between the pair of front side surfaces 3d of the supporter 3, the angle formed between the pair of flat surface portions 3f on the main body side of the supporter 3, and the angle formed between the pair of side walls 5b of the insert mounting seat 5 is 80° when viewed from the up-down direction is given in the first and second embodiments and each of the modification examples described above, the invention is not limited thereto. Although particularly not shown, each of the angles may be, for example, 90°, 60°, 55°, or the like. Also in this case, as in the embodiments described above, a product of the embodiment of the present invention is applicable to the existing indexable cutting tool including various types of diamond-shaped inserts according to the ISO standards.

According to the present invention, all of the configurations described in the embodiments, the modification examples described above, and the like may be combined with each other without departing from the scope of the present invention. Alternatively, additions, omissions, substitutions or other changes of the configurations can be made. In addition, the present invention is not limited to the embodiments described above and the like, but is limited only to the scope of the claims.

### [Industrial Applicability]

In the clamp structure of a cutting insert and the indexable cutting tool according to the embodiments of the present invention, the cutting insert can be stably held while making the size of the cutting insert small and reducing costs. Therefore, the present invention is industrially applicable.

### [Reference Signs List]

1, 11: indexable cutting tool
2: cutting insert
3: supporter
4: tool main body
5: insert mounting seat
6: clamp member
10, 20, 60, 70, 80: clamp structure of cutting insert
23: outer peripheral surface
23a: front side wall
23b: rear side wall
23c: lateral side wall
23d: surface to be pressed
23e: surface to be restrained
24: cutting edge
31: supporter main body
31a: through hole
31b: restraining surface
31c: surface to be contacted
31d: stopper
32: gripping arm
32a: pressing surface
33: pocket
34: slit
34a: pocket opening
C1: center axis of supporter

## Claims

1. A clamp structure of a cutting insert that is detachably mounted on an insert mounting seat of a tool main body with a clamp member, the clamp structure of a cutting insert comprising:
the cutting insert having a polygonal columnar shape and at least a front end portion at which a cutting edge is disposed; and
a supporter in a plate shape configured to hold an outer peripheral surface of the cutting insert from a side and a rear side,
wherein the cutting insert has:
a surface to be pressed that is disposed at a portion of the outer peripheral surface which faces at least the side, and
a surface to be restrained that is disposed at a portion of the outer peripheral surface which is positioned on the rear side of the surface to be pressed,
the supporter has:
a supporter main body to which the clamp member is locked,
a gripping arm that protrudes from the supporter main body in a direction orthogonal to a plate thickness direction of the supporter and that elastically deforms with respect to the supporter main body,
a pocket that has a recessed shape recessed from a front end portion of the supporter to the rear side and in which the cutting insert is disposed, and
a slit that is disposed between the supporter main body and the gripping arm and that is open to both sides of the supporter in the plate thickness direction,
the supporter main body has a restraining surface that comes into contact with the surface to be restrained,
the gripping arm has a pressing surface that comes into contact with the surface to be pressed,
the slit has a pocket opening that is open to the pocket, and
the pocket opening is disposed between the restraining surface and the pressing surface.

2. The clamp structure of a cutting insert according to Claim 1,
wherein the cutting insert has: a front-back inverted symmetrical shape in the plate thickness direction and has a front-rear inverted symmetrical shape in a front-rear direction.

3. The clamp structure of a cutting insert according to Claim 1 or 2,
wherein the cutting insert has: a hexagonal prismatic shape,
the outer peripheral surface has:
a pair of front side walls that face a front side,
a pair of rear side walls that face the rear side, and
a pair of lateral side walls that are positioned between the front side walls and the rear side walls and that face the side,
the surface to be restrained is disposed at the rear side wall, and
the surface to be pressed is disposed at at least the lateral side wall.

4. The clamp structure of a cutting insert according to any one of Claims 1 to 3,
wherein the supporter main body has a through hole that is positioned on a center axis of the supporter and that penetrates the supporter main body in the plate thickness direction, and
a part of the clamp member is inserted and locked into the through hole.

5. The clamp structure of a cutting insert according to Claim 4,
wherein the supporter has: a rectangular plate shape, and
a center axis of the through hole is coaxially disposed with the center axis of the supporter.

6. The clamp structure of a cutting insert according to Claim 4 or 5,
wherein a rear end portion of the cutting insert is positioned on a front side of the center axis of the supporter.

7. The clamp structure of a cutting insert according to any one of Claims 4 to 6,
wherein the cutting insert is pulled out from the pocket to an upper side,
the part of the clamp member is inserted from a lower side into the through hole, and
the through hole has:
a surface to be contacted that is disposed at an inner peripheral surface of the through hole and that comes into contact with the part of the clamp member, and
a stopper that is disposed on the lower side of the surface to be contacted at the inner peripheral surface of the through hole and that protrudes more than the surface to be contacted into the through hole.

8. The clamp structure of a cutting insert according to Claim 7,
wherein the surface to be contacted is disposed at at least a posterior end portion of the inner peripheral surface of the through hole, and
the stopper is disposed at at least the posterior end portion of the inner peripheral surface of the through hole.

9. The clamp structure of a cutting insert according to Claim 7 or 8,
wherein the through hole has: an up-down inverted symmetrical shape.

10. The clamp structure of a cutting insert according to any one of Claims 1 to 9,
wherein the slit extends about a center axis of the supporter when viewed from the plate thickness direction.

11. The clamp structure of a cutting insert according to Claim 10,
wherein the slit has an arc shape when viewed from the plate thickness direction.

12. The clamp structure of a cutting insert according to any one of Claims 1 to 11,
wherein a pair of the gripping arms are provided, and
the pocket is disposed between the pair of gripping arms.

13. An indexable cutting tool comprising:
the clamp structure of a cutting insert according to any one of Claims 1 to 12;
the tool main body having the insert mounting seat; and
the clamp member configured to fix the clamp structure of a cutting insert to the insert mounting seat.
